# EUROPÄISCHE PATENTANMELDUNG

(11) **EP 4 516 605 A2**
(43) Veröffentlichungstag der Anmeldung: **05.03.2025**
(21) Anmeldenummer: 25150506.1
(22) Anmeldetag: 27.01.2021
(51) Int. Cl.: B60T 13/74

(54) **BREMSSYSTEM SOWIE VERFAHREN ZUM STEUERN EINES BREMSSYSTEMS**

(30) Priorität: 28.01.2020 DE 102020101988; 03.02.2020 DE 102020102590
(62) Teilanmeldung aus: 21702236.7
(71) Anmelder: IPGATE AG, 8808 Pfäffikon SZ (CH)
(72) Erfinder: LEIBER, Heinz, 71739 Oberriexingen (DE); LEIBER, Thomas, 22203 Rogoznica (HR)
(74) Vertreter: Meissner Bolte Partnerschaft mbB

(57) **Zusammenfassung**

Die Erfindung bezieht sich auf ein Bremssystem (2) mit einem ersten Modul, umfassend einer ersten Druckversorgungseinheit (6) mit einem elektromotorischen Antrieb (8), eine zweite Druckversorgungseinheit (14) mit Betätigungselement, insbesondere Bremspedal, und ein erstes Steuergerät (9) zur Steuerung der ersten Druckversorgungseinheit (6), wobei das erste Modul dazu eingerichtet ist, zumindest einen ersten Bremskreis (BK1) über einen ersten Anschlusspunkt (A1) und zumindest einen zweiten Bremskreis (BK2) über einen zweiten Anschlusspunkt (A2) mit einem Druckmittel zu beaufschlagen, wobei den Bremskreisen (BK1, BK2) Radbremsen (RB1, RB2, RB3, RB4) zugeordnet sind, wobei das Bremssystem dazu ausgebildet ist, ein aktives Rückziehen mindestens eines Bremsbelages der Radbremsen (RB1, RB2, RB3, RB4) durch Unterdruckerzeugung mittels der ersten Druckversorgungseinheit (6) zu implementieren.

## Beschreibung

Die Erfindung betrifft ein Bremssystem sowie ein Verfahren zum Steuern eines Bremssystems.

Der Trend zu Fahrzeugen, die zu einem autonomen Fahren ausgebildet sind, bedingt für das Bremssystem einerseits hohe Anforderungen an die Fehlersicherheit und andererseits redundante Funktionen, z. B. für eine Bremsdruckerzeugung, eine Spannungsversorgung und Rechnerfunktionen.

Favorisiert werden üblicherweise so genannte 1-Box- und 2-Box-Systeme. Letztere bestehen aus einem elektrischen Bremskraftverstärker (BKV), einem so genannten E-Booster, und einem ESP-System (englisch "Electronic Stability Control System").

Die bekannten Lösungen weisen relativ große Baulängen und/oder ein hohes Gewicht auf.

In der WO2011/098178 sowie DE 10 2014 205 645 A1 (nachfolgend als Variante A bzw. als Folgeverstärker oder E-Booster bezeichnet) ist eine Lösung mit koaxialem Antrieb beschrieben, in dem ein Elektromotor über ein Getriebe und Kolben auf den Hauptzylinderkolben (HZ-Kolben) wirkt. Die BKV-Steuerung erfolgt über ein elektrisches Glied und Reaktionsscheibe als so genannter Folgeverstärker, der Pedalweg ist eine Funktion des Bremsdruckes und der Volumenaufnahme des Bremssystems, was bei Fading oder Bremskreisausfall lange Pedalwege erfordert.

Die WO2009/065709 zeigt einen E-Booster ebenfalls mit Folgeverstärker-Funktion (nachfolgend als Variante B, bzw. als Folgeverstärker oder E-Booster bezeichnet). Hier erfolgt die BKV-Steuerung über einen Pedalweg und/oder über einen Pedaldruck, also den Druck, mit dem das Pedal betätigt wird. Eine getrennte Druckversorgung mit E-Motor und Plunger wirkt über den Verstärkerkolben auf den HZ-Kolben.

Die WO2012/019802 zeigt eine Anordnung ähnlich WO2011/098178 mit koaxialem Antrieb, in dem ein E-Motor über ein Getriebe und Kolben auf den HZ-Kolben wirkt (nachfolgend als Variante C bezeichnet). Hier ist eine zusätzliche Kolbenzylindereinheit eingesetzt, welche auf einen Wegsimulatorkolben wirkt. Damit ist der Pedalweg unabhängig von z. B. Fading und Bremskreisausfall. Der Aufwand und die Baulänge sind jedoch hoch.

Die DE 10 2009 033 499 zeigt einen Bremskraftverstärker mit zusätzlicher ESP-Einheit mit hydraulischer Betätigung des Verstärkerkolbens und außenliegender Druckversorgung (nachfolgend auch als Variante D bezeichnet). Diese Anordnung mit vier bzw. fünf Kolben und sechs Magnetventilen (MV) ist aufwändig und in der Baulänge ungünstig. Der nicht hydraulisch wirkende Wegsimulator (WS) liegt innerhalb der dem Hauptzylinder vorgebauten Kolben-Zylinder-Einheit und kann weder gedämpft noch über ein Magnetventil (MV) geschaltet werden.

Alle o.g. Lösungen haben eine redundante Bremskraftverstärkungsfunktion, da bei Ausfall des BKV-Motors die ESP-Einheit mit Pumpe ähnlich den Assistenzfunktionen mit Vakuum-BKV im autonomen Fahrbetrieb die Bremsfunktion gewährleistet.

Bei einem Ausfall des ESP-Motors kann das ABS über die Möglichkeit der Druckmodulation durch den Motor des Bremskraftverstärkers, wie in der WO2010/088920 beschrieben, weiterfunktionieren, in dem der Kolben des Hauptbremszylinders zum Druckaufbau und Druckabbau vor und zurückbewegt wird. Wird der Bremskraftverstärker in Kombination mit einer ESP-Einheit mit der typischen Ventilschaltung der ESP-Einheit eingesetzt, wie z.B. in Fig. 1 der DE 10 2014 205 645 A1 detailliert ausgeführt, kann der Druck über die stromlos offenen Einlassventile (Bezugszeichen 32a, 32,b, 34b, 34a der Fig.1 der DE10 2014 205 645 A1) sowie USV-Ventile (Bezugszeichen 30a, 30b der Fig. 1 der DE 10 2014 205 645 A1) auf und abgebaut werden, d.h. es kann eine gemeinsame Druckregelung für alle vier Räder umgesetzt werden, was keinen optimalen Bremsweg zur Folge hat.

Alle bisher bekannten 1-Box-Systeme haben einen sogenannten Wegsimulator (insbesondere für Brake-by-Wire), um eine fortschrittliche Pedalwegcharakteristik zu implementieren.

Die bekannten Systeme mit E-Booster und ESP haben nur eine Redundanz in der Druckversorgung, d. h. bei einem Ausfall des E-Boosters gibt es eine redundante Druckversorgung mit redundanter Leistung für die Bremskraftverstärkung durch das ESP. Höhere Anforderungen an die Sicherheit sind nicht berücksichtigt.

Das Packaging, also eine Anordnung der einzelnen Komponenten des Bremssystems zu einer einbaufertigen Einheit und ein Bauvolumen dieser Einheit sind von großer Bedeutung. Insbesondere bei Bremssystemen, die ihren Einsatz in Kraftfahrzeugen finden, die zu einem halbautomatisierten oder gar vollautomatisierten Fahren ausgebildet sind, sind viele Varianten mit z. B. einem Tandemhaupt(brems)zylinder oder einem Single-Haupt(brems)zylinder zu berücksichtigen. Beispiele für bekannte Packaging-Varianten sind eine senkrechte Anordnung einer Druckversorgungseinheit zu einer Achse des Haupt(brems)zylinders (wie beispielsweise in der EP 2 744 691 beschrieben) oder eine parallele Anordnung der Druckversorgungseinheit zu der Achse des Haupt(brems)zylinders (wie beispielsweise in der DE 10 2016 105 232 beschrieben). Letztere zeichnet sich speziell durch eine geringere Baubreite im Vergleich zu erstgenannter Packaging-Variante aus.

Ausgehend vom Stand der Technik ist es eine Aufgabe der vorliegenden Erfindung ein verbessertes Bremssystem anzugeben.

Insbesondere liegt der Erfindung die Aufgabe zugrunde, ein Bremssystem für den Einsatz für einen autonomen Fahrbetrieb (nachfolgend auch als AD bezeichnet) und/oder E-Fahrzeuge/Hybridfahrzeuge mit zunehmend starker Rekuperationsleistung (Energierückgewinnung durch Bremsen über Generator/ bzw. Antriebsmotor im Generatorbetrieb) zu schaffen. Vorzugsweise wird das Gewicht verringert und/oder die Abmessungen des Systems verkleinert und/oder die Zuverlässigkeit erhöht.

Vorzugsweise soll ein kostengünstiges Bremssystem für den autonomen Fahrbetrieb geschaffen werden, das alle geforderten Redundanzen sowie eine sehr hohe Sicherheitsanforderung erfüllt.

Außerdem soll mit dem Bremssystem bei einem Ausfall von ESP sowohl eine im Bremsweg und Stabilität ausreichende Funktion von ABS, als auch eine ausreichende Funktion der Rekuperation erreicht werden.

Insbesondere ist es Aufgabe der vorliegenden Erfindung ein verbessertes Bremssystem sowie ein Verfahren zum Steuern eines Bremssystems mit einer redundanten Druckversorgung, sehr hohem Funktionsumfang und Verfügbarkeit, insbesondere bei Bremskreisausfall bei gleichzeitig sehr kurzer Baulänge und geringen Kosten anzugeben. Weiterhin soll ein Verfahren bereitgestellt werden, das eine sehr hohe Verfügbarkeit auch bei Teilausfällen/Leckagen ermöglicht.

Mit Blick auf das Bremssystem wird die Aufgabe erfindungsgemäß gelöst durch ein Bremssystem mit den Merkmalen des Anspruchs 1. Mit Blick auf das Verfahren wird die Aufgabe erfindungsgemäß gelöst durch ein Verfahren mit den Merkmalen des Anspruchs 18.

Die auf das Bremssystem gerichtete Aufgabe wird insbesondere erfindungsgemäß gelöst durch ein Bremssystem mit:
- einem ersten Modul, umfassend einer ersten Druckversorgungseinheit mit einem elektromotorischen Antrieb, eine optionale zweite Druckversorgungseinheit und ein erstes Steuergerät zur Steuerung der ersten Druckversorgungseinheit, wobei das erste Modul dazu eingerichtet ist, zumindest einen ersten Bremskreis über einen ersten Anschlusspunkt und zumindest einen zweiten Bremskreis über einen zweiten Anschlusspunkt mit einem Druckmittel zu beaufschlagen, wobei den Bremskreisen Radbremsen zugeordnet sind,
- einem zweiten Modul, umfassend eine dritte Druckversorgungseinheit, insbesondere eine Motor-Pumpen-Einheit, Trennventile sowie Bremsdruckeinstellventile, insbesondere Auslass- und Einlassventile, zur Einstellung eines Drucks in den Radbremsen und ein zweites Steuergerät zur Steuerung der Bremsdruckeinstellventile,
- einer Detektionseinheit zur Detektion eines ersten Fehlerfalls, insbesondere eines zu mindestens teilweisen Ausfalls der dritten Druckversorgungseinheit, wobei das Bremssystem dazu eingerichtet ist, im ersten Fehlerfall zur Bereitstellung einer ABS-Funktion und/oder eines Giermomenteingriffs eine (radindividuelle und/oder selektive) Einstellung der Drücke in den Radbremsen unter Ansteuerung mindestens eines der Bremsdruckeinstellventile des zweiten Moduls und/oder der Trennventile des zweiten Moduls und der ersten Druckversorgungseinheit zu implementieren.

Unter der Druckversorgungseinheit kann hierbei allgemein eine Einheit, insbesondere eine Baueinheit, des Bremssystems verstanden werden, die einen Bremsdruck bereitstellt. Die Druckversorgungseinheit dient also einer Beaufschlagung des zumindest einen Bremskreises mit dem Druckmittel. Bei der dritten Druckversorgungseinheit handelt es sich bevorzugt um eine ESP-Einheit der eingangs beschriebenen Art. Die Trennventile können hierbei bidirektional ausgebildet sein, d.h. in zwei Durchflussrichtungen hydraulisch durchlässig sein. Die optionale zweite Druckversorgungseinheit kann je nach Ausgestaltung des Bremssystems und/oder auch des Einsatzgebietes des Bremssystems als elektronisches Pedal oder als ein Zentralrechner ausgebildet sein.

Unter dem zumindest teilweisen Ausfall der dritten Druckversorgungseinheit kann hierbei verstanden werden, dass die Motor-Pumpen-Einheit ausfällt, während die anderen Komponenten der dritten Druckversorgungseinheit noch funktionsfähig sind.

Die Trennventile sowie Bremsdruckeinstellventile, insbesondere die Druckauf- und Druckabbauventile (nachfolgend auch als Einlassventile EV und Auslassventile AV bezeichnet) sind insbesondere als Magnetventile ausgebildet. Magnetventile haben sich speziell durch ihre einfache Ansteuerbarkeit als vorteilhaft erwiesen.

In einer Ausführungsform wird die erste Druckversorgungseinheit im ersten Fehlerfall derart gesteuert, dass sie bei einem Druckabbau zur Bereitstellung des ABS-Bremsbetriebs eine Drucksenke mit einem niedrigeren Druck als die Drücke in den Radbremsen generiert.

In einer weiteren Ausführungsform sind zumindest einige der Trennventile des ersten Moduls zur Herstellung einer hydraulischen Verbindung zwischen den Bremsdruckeinstellventilen, insbesondere den Auslassventilen und den Anschlusspunkten angeordnet und ausgebildet. Hierbei ist das Bremssystem vorzugsweise dazu konfiguriert, im ersten Fehlerfall für einen Druckabbau in einer der Radbremsen das zugeordnete Auslassventil zu öffnen.

Zumindest einige der Trennventile des ersten Moduls sind in einer Ausführungsform zur Herstellung einer hydraulischen Verbindung zwischen den Bremsdruckeinstellventilen, insbesondere den Auslassventilen, und den Anschlusspunkten angeordnet und ausgebildet, wobei das Bremssystem vorzugsweise dazu konfiguriert ist, im ersten Fehlerfall für einen Druckabbau in einer der Radbremsen das zugeordnete Auslassventil zu öffnen.

Zweckdienlicherweise ist eine kommunikative Verbindung, insbesondere eine Busverbindung, zwischen dem ersten Steuergerät und dem zweiten Steuergerät ausgebildet, wobei das erste Steuergerät vorzugsweise dazu ausgebildet ist, Druckmesswerte des zweiten Moduls und/oder Raddrehzahlsignale über die kommunikative Verbindung zu empfangen. Bei der kommunikativen Verbindung kann es sich alternativ um eine Ethernet- oder Flexray-Verbindung handeln. Weiterhin alternativ kann die kommunikative Verbindung auch drahtlos oder als analoge Verbindung, z.B. zum Bestimmen eines Messwertes, ausgebildet sein.

Weiterhin alternativ kann die kommunikative Verbindung, insbesondere die Busverbindung zwischen dem ersten Steuergerät und dem zweiten Steuergerät ausgebildet sein, wobei das erste Steuergerät und das zweite Steuergerät vorzugsweise dazu ausgebildet sind, Druckmesswerte der dritten Druckversorgungseinheit und/oder Raddrehzahlsignale über die kommunikative Verbindung zu empfangen. Somit ist es möglich, bei einem Ausfall der kommunikativen Verbindung durch die von beiden Steuergeräten eingelesenen Daten eine ABS-Regelung vorzunehmen. Unter Empfangen kann hierbei auch ein Einlesen derartiger Sensorwerte und -signale von einem der Steuergeräte über die kommunikative Verbindung verstanden werden.

In einer Ausführungsform ist das erste Steuergerät und/oder das zweite Steuergerät und/oder ein drittes Steuergerät dazu ausgebildet, im ersten Fehlerfall, die erste Druckversorgungseinheit und die Bremsdruckeinstellventile zu steuern, um eine radindividuelle und/oder bremskreisindividuelle Druckregelung in den Radbremsen oder den Bremskreisen zu implementieren. Erfindungsgemäß kann auch eine mittelbare Steuerung der Aktuatoren, z.B. Ventile, über das jeweils andere Steuergerät erfolgen. Unter dem dritten Steuergerät kann beispielsweise eine zentrale Steuereinheit verstanden werden.

In einer weiteren Ausführungsform ist ein erstes Trennventil des ersten Moduls in einer ersten Hydraulikleitung zwischen der ersten Druckversorgungseinheit und dem ersten Anschlusspunkt angeordnet. Zudem ist gemäß dieser Ausführungsform ein zweites Trennventil in einer zweiten Hydraulikleitung zwischen der ersten Druckversorgungseinheit und dem zweiten Anschlusspunkt angeordnet. Das Bremssystem ist hierbei dazu ausgebildet, einen zweiten Fehlerfall, insbesondere einen Totalausfall der dritten Druckversorgungseinheit, zu detektieren. Unter dem Totalausfall kann hierbei verstanden werden, dass alle Komponenten der dritten Druckversorgungseinheit ausgefallen und nicht mehr funktionsfähig sind. Weiterhin ist das Bremssystem dazu ausgebildet im zweiten Fehlerfall, die erste Druckversorgungseinheit und das erste und zweite Trennventil zu steuern, um zumindest eine bremskreisindividuelle Druckregelung in den zumindest zwei Bremskreisen zu implementieren. Die Steuerung erfolgt hierbei vorzugsweise über das erste Steuergerät.

Gemäß einer Ausführungsform ist das Bremssystem und insbesondere das erste Steuergerät dazu eingerichtet, eine inhomogene Straßenbedingung, insbesondere eine µ-Split-Situation, zu detektieren und im zweiten Fehlerfall und bei der detektierten inhomogenen Straßenbedingung, die erste Druckversorgungseinheit zu steuern. Diese Steuerung dient hierbei dazu, um in mindestens einem ausgewählten der Bremskreise einen Soll-Bremsdruck einzustellen, der in Abhängigkeit von einem Radblockierdruck der Radbremse des ausgewählten Bremskreises mit dem im Vergleich zu der anderen Radbremse des ausgewählten Bremskreises höheren Reibwert bestimmt wird. Die inhomogene Straßenbedingung wird dabei derart detektiert, dass eine Druckdifferenz der beiden Radblockierdrücke erfasst wird. Weist diese Druckdifferenz einen prozentualen Wert von mehr als 30% oder 40% auf, liegt eine inhomogene Straßenbedingung vor.

In einem dritten Fehlerfall, insbesondere bei einem zusätzlichen Ausfall der vorstehend erwähnten Radsensoren oder der Kommunikation der Raddrehzahlsignale von zweiten Modul an das erste Modul, ist das Bremssystem, insbesondere das erste Steuergerät in einer Ausführungsform dazu eingerichtet, im dritten Fehlerfall mittels der ersten Druckversorgungseinheit den Druckaufbau und den Druckabbau zu steuern, um ein 1-Kanal-ABS unter Verwendung von Raddrehzahlsensoren und/oder in einem vierten Fehlerfall eine Stotterbremse durch Druckmodulation zwischen zwei fest eingestellten Druckniveaus in beiden Bremskreisen zu implementieren. Somit ist auch bei einem weiteren Fehlerfall und eines damit verbundenen zusätzlichen Ausfalls weiterer Komponenten des Bremssystems eine bessere Manövrierbarkeit und Bremsleistung des Fahrzeuges im Vergleich zu den im Stand der Technik bekannten Bremssystemen erreicht.

Zweckdienlicherweise ist mindestens ein Drucksensor zum Erfassen eines Bremsdruckes innerhalb des zumindest einen Bremskreises vorgesehen.

In einer Ausführungsform ist die erste Hydraulikleitung zwischen der ersten Druckversorgungseinheit und dem ersten Anschlusspunkt ventillos ausgebildet. Zudem ist die zweite Hydraulikleitung zwischen der ersten Druckversorgungseinheit und dem zweiten Anschlusspunkt ventillos ausgebildet. Unter ventillos kann hierbei verstanden werden, dass in der ersten bzw. zweiten Hydraulikleitung zwischen der ersten Druckversorgungseinheit und dem ersten bzw. dem zweiten Anschlusspunkt keine Ventile angeordnet sind.

Gemäß einer weiteren Ausführungsform weist das erste Modul eine Rotationspumpe, insbesondere eine einkreisige 1-Kolbenpumpe oder eine Mehrkolbenpumpe, zum Druckaufbau und Druckabbau auf. Zudem umfasst das erste Modul gemäß dieser Ausführungsform ein mit einem Vorratsbehälter hydraulisch verbundenes Magnetventil sowie zumindest einen optionalen Druckgeber. Der optionale Druckgeber ist vorzugsweise kommunikativ mit dem ersten Steuergerät zur Regelung des Druckaufbaus und des Druckabbaus verbunden.

Gemäß einer alternativen Ausführungsform ist die erste Druckversorgungseinheit als Zahnradpumpe zum Druckaufbau und Druckabbau ausgebildet. Zweckdienlicherweise wird die Zahnradpumpe unter Verwendung eines Druckgebers oder in Abhängigkeit von einer Messung eines Stroms, insbesondere eines Phasenstroms i des elektromotorischen Antriebes der Zahnradpumpe, und eines Winkels α eines Rotors des elektromotorischen Antriebes gesteuert. Bei vorhandenem Druckgeber können die besagten Messungen zur Bereitstellung einer Redundanz (heiß oder kalt) verwendet werden.

Hinsichtlich der unterschiedlichen Ausbildungsvarianten der ersten Druckversorgungseinheit trägt diese somit unterschiedlichen Konfigurationsvarianten Rechnung.

In einer weiteren Ausführungsform ist mindestens ein drittes Trennventil vorgesehen, das derart angeordnet und ausgebildet ist, dass in einem geschlossenen Zustand des dritten Trennventils der erste Bremskreis hydraulisch von der ersten und zweiten Druckversorgungseinheit entkoppelt ist.

Weiterhin ist die erste Hydraulikleitung und/oder die zweite Hydraulikleitung bevorzugt über (jeweils) ein Saugventil mit einem Vorratsbehälter verbunden. Die Saugventile dienen dazu, dass die dritte Druckversorgereinheit direkt aus dem Vorratsbehälter schnell mit geringen hydraulischen Widerständen Volumen fördern kann und beim Fördern die erste und zweite Druckversorgereinheit durch den Betrieb der dritten Druckversorgereinheit abgekoppelt und nicht durch den Betrieb beeinträchtigt wird.

Gemäß einer weiteren Ausgestaltung ist an der zweiten Druckversorgungseinheit ein Betätigungselement, insbesondere ein Bremspedal, angeordnet. Die zweite Druckversorgungseinheit umfasst hierbei einen Hauptbremszylinder mit einem einzigen mittels des Bestätigungselements betätigbaren Kolben mit einem Druckraum sowie einen an den Druckraum angeschlossenen Wegsimulator. Der Druckraum ist ferner über ein schaltbares Einspeis-Magnetventil FV mit mindestens einem Bremskreis verbunden.

Durch die vorstehend beschriebenen Ausführungsformen des erfindungsgemäßen Bremssystems sind insbesondere in den nachfolgend aufgeführten Fehlerfällen (alle oder eine Auswahl dieser Fehlerfälle) ein Betrieb unter Berücksichtigung von Sicherheitsaspekten ermöglicht.

| | |
|---|---|
| Fehlerfall 1: | Ausfall des Motors der dritten Druckversorgungseinheit (ESP-Einheit); 4-Kanal-ABS durch Regelung über Ventile und erste Druckversorg ungsei n heit; |
| Fehlerfall 2: | Komplettausfall der dritten Druckversorgungseinheit (ESP-Einheit); 2-Kanal-ABS mit "select-low"/"select-high"-Regelung atypisch zum Normalbetrieb; |
| Fehlerfall 3: | Komplettausfall der dritten Druckversorgungseinheit (ESP-Einheit), Raddrehzahlsensoren sind redundant verfügbar und werden direkt von den Radbremsen eingelesen in das erste Modul; Einrichtung eines 1-Kanal-ABS; |
| Fehlerfall 4: | Komplettausfall der dritten Druckversorgungseinheit (ESP-Einheit) und Ausfall der Raddrehzahlsensoren; Einrichtung einer automatischen Stotterbremse. |

Alternativ oder ergänzend zu der ABS-Regelung im Fehlerfall 1 kann weiterhin in diesem Fehlerfall noch eine Giermomentregelung erfolgen, sodass in selektiv ausgewählten Rädern ein Bremsdruck erzeugt wird.

Mit Blick auf das Verfahren wird die Aufgabe insbesondere gelöst durch ein Verfahren zum Steuern eines Bremssystems, insbesondere des vorstehend beschriebenen Bremssystems, umfassend die Schritte:
- Steuern einer ersten Druckversorgungseinheit eines ersten Moduls mittels eines ersten Steuergeräts in einem Normalbetrieb,
- Steuern einer Vielzahl von Bremsdruckeinstellventilen in einem zweiten Modul in einem Normalbetrieb,
- Detektieren eines ersten Fehlerfalls, insbesondere eines Teilausfalls des zweiten Moduls,
- Steuerung des Bremssystems im ersten Fehlerfall derart, dass zur Bereitstellung eines ABS-Bremsbetriebs und/oder eines Giermomenteingriffs eine (radindividuelle und/oder selektive) Einstellung der Drücke in den Radbremsen unter Verwendung mindestens eines insbesondere bidirektionalen Trennventils des zweiten Moduls und der ersten Druckversorgungseinheit erfolgt.

In einer Ausführungsform umfasst das Verfahren weiterhin die Schritte:
- Detektieren eines zweiten Fehlerfalls, insbesondere eines Totalausfalls der dritten Druckversorgungseinheit,
- ein Steuern der ersten Druckversorgungseinheit und mindestens zweier Trennventile des ersten Moduls derart, dass im zweiten Fehlerfall eine bremskreisindividuelle Druckregelung in den zumindest zwei Bremskreisen implementiert wird.

Gemäß einer weiteren Ausführungsform umfasst das Verfahren die Schritte:
- Detektieren einer inhomogenen Straßenbedingung, insbesondere einer µ-Split-Situation,
- Steuern der ersten Druckversorgungseinheit im zweiten Fehlerfall derart, dass bei inhomogenen Straßenbedingung die Radbremse eines ausgewählten Bremskreises mit dem im Vergleich zu der anderen Radbremse höheren Reibwert zur Bestimmung eines Soll-Bremsdrucks herangezogen wird.

Zudem umfasst das Verfahren in einer weiteren Ausgestaltung die Schritte:
- ein Detektieren eines dritten Fehlerfalls, insbesondere ein Totalausfall der dritten Druckversorgungseinheit und ein Ausfall von Radsensoren,
- ein Steuern der ersten Druckversorgungseinheit im dritten Fehlerfall derart, dass ein 1-Kanal-ABS oder in einem vierten Fehlerfall eine Stotterbremse durch Druckmodulation zwischen zwei vorgegebenen Druckniveaus in zumindest einem der Bremskreise (BK1, BK2) implementiert wird.

Gemäß einer alternativen Ausführungsform umfasst das Verfahren weiterhin die Schritte:
- Bestimmen eines ersten Radblockierdrucks an einer ersten Radbremse, die einem der beiden Bremskreisen zugeordnet ist;
- Bestimmen eines zweiten Radblockierdrucks an einer Radbremse, die demselben Bremskreis zugeordnet ist, wobei eine inhomogene Straßenbedingung dann detektiert wird, wenn der erste und der zweite Radblockierdruck eine Differenz von mehr als 30 Prozent aufweisen.

Für das Verfahren ergeben sich ähnliche Vorteile wie diese in Verbindung mit dem Bremssystem beschrieben wurden.

Ausführungsbeispiele der Erfindung werden nachfolgend anhand der Figuren näher erläutert. Diese zeigen in teilweise stark vereinfachter Darstellung:
- Fig. 1a: ein Prinzipschaltbild eines ersten Ausführungsbeispiels des Bremssystems mit einer ersten Druckversorgungseinheit gemäß einer ersten Ausführungsform,
- Fig. 1b: ein Prinzipschaltbild eines zweiten Ausführungsbeispiels des Bremssystems mit der ersten Druckversorgungseinheit gemäß der ersten Ausführungsform,
- Fig. 2: ein Prinzipschaltbild des ersten Ausführungsbeispiels des Bremssystems mit einer ersten Druckversorgungseinheit gemäß einer zweiten Ausführungsform,
- Fig. 3: ein Prinzipschaltbild des ersten Ausführungsbeispiels des Bremssystems mit einer ersten Druckversorgungseinheit gemäß einer dritten Ausführungsform,
- Fig. 4: ein Prinzipschaltbild einer dritten Druckversorgungseinheit (ESP-Einheit),
- Fig. 5: ein Prinzipschaltbild der dritten Druckversorgungseinheit (ESP-Einheit) während eines Druckabbaus in einem ersten Fehlerfall bei einer 4-Kanal-ABS-Regelung,
- Fig. 6: ein Prinzipschaltbild der dritten Druckversorgungseinheit (ESP-Einheit) während eines Druckaufbaus im ersten Fehlerfall bei einer 4-Kanal-ABS-Regelung,
- Fig. 7a: ein skizzierter Zeitablauf einer "select-high"-Regelung in einem Bremskreis mit zwei Radbremsen,
- Fig. 7b: ein skizzierter Zeitablauf einer "select-low"-Regelung in einem Bremskreis mit zwei Radbremsen,
- Fig. 8: ein Prinzipschaltbild eines ersten Ausführungsbeispiels des erfindungsgemäßen Bremssystems mit zwei Trennventilen und einem Einspeiseventil,
- Fig. 9: ein Prinzipschaltbild eines zweiten Ausführungsbeispiels des erfindungsgemäßen Bremssystems mit vier Trennventilen und einem Einspeiseventil,
- Fig. 10: ein Prinzipschaltbild der dritten Druckversorgungseinheit (ESP-Einheit) während eines Druckaufbaus im ersten Fehlerfall bei einer Giermomentregelung sowie
- Fig. 11: ein Prinzipschaltbild der dritten Druckversorgungseinheit (ESP-Einheit) während eines Druckabbaus im ersten Fehlerfall bei einer Giermomentregelung.

In den Figuren sind gleichwirkende Bauteile teilweise mit den gleichen Bezugszeichen bezeichnet.

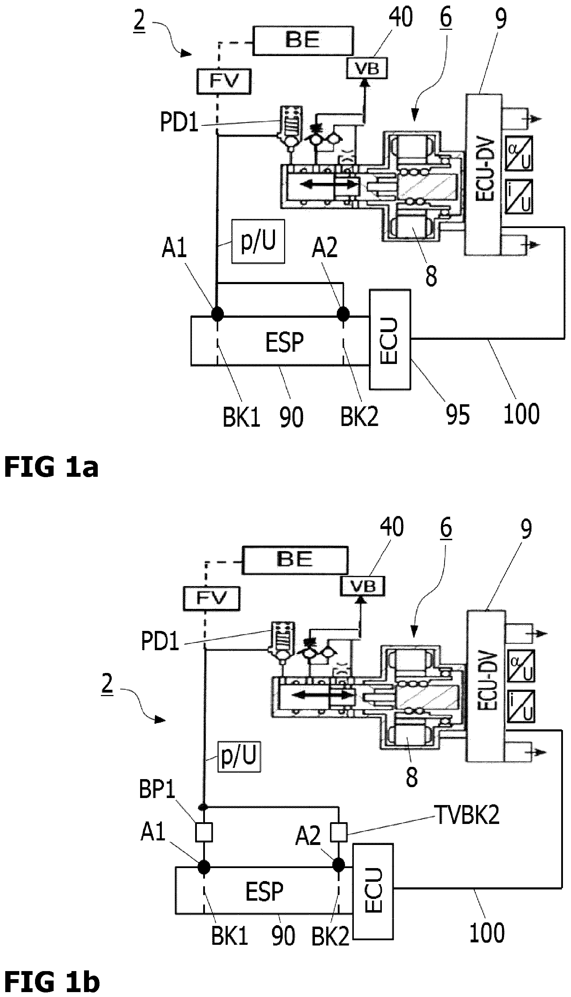

Das in Fig. 1a dargestellte Bremssystem 2 gemäß einem ersten Ausführungsbeispiel weist eine erste Druckversorgungseinheit 6 in einer ersten Ausführungsform auf. In dieser Ausführungsform weist die erste Druckversorgungseinheit 6 einen elektromotorischen Antrieb 8 auf, der auf einen Kolben einer Kolben-Zylinder-Einheit wirkt. Weiterhin weist das Bremssystem 2 und insbesondere die erste Druckversorgungseinheit 6 ein erstes Steuergerät 9 auf, welches speziell den elektromotorischen Antrieb 8 mit Steuersignalen speist.

Die erste Druckversorgungseinrichtung 6 dient hierbei einem Beaufschlagen von einem ersten Bremskreis BK1 und einem zweiten Bremskreis BK2 mit einem Druckmittel. Hierzu ist der Zylinder der ersten Druckversorgungseinheit 6 über eine Hydraulikleitung mit dem ersten Bremskreis BK1 (vgl. Anschlusspunkt A1) und mit dem zweiten Bremskreis BK2 (vgl. Anschlusspunkt A2) hydraulisch verbunden.

Im Ausführungsbeispiel gemäß Fig. 1a ist in dieser Hydraulikleitung zusätzlich ein Trennventil PD1 angeordnet, über das die erste Druckversorgungseinheit 6 hydraulisch von dem ersten Bremskreis BK1 und dem zweiten Bremskreis BK2 reversibel trennbar ist. Das Trennventil PD1 ist hierbei als Magnetventil ausgebildet.

Zusätzlich weist die erste Druckversorgungseinheit 6 und speziell der Zylinder der ersten Druckversorgungseinheit 6 eine hydraulische Verbindungsleitung zu einem Vorratsbehälter 40 auf, in dem ein Rückschlagventil angeordnet ist. Die hydraulische Verbindung zu dem Vorratsbehälter 40 dient einem Ansaugen von Druckmittel aus dem Vorratsbehälter 40.

Weiterhin weist das Bremssystem 2 eine dritte Druckversorgungseinheit 90 auf, die in der Fig. 1a lediglich schematisiert dargestellt ist. Die dritte Druckversorgungseinheit 90 wird auch als ESP-Einheit bezeichnet bzw. die ESP-Einheit umfasst die dritte Versorgungseinheit 90. Zudem ist ein zweites Steuergerät 95 vorgesehen, welches die dritte Druckversorgungseinheit 90 steuert.

Zwischen dem ersten Steuergerät 9 und dem zweiten Steuergerät 95 ist eine kommunikative Verbindung 100, speziell eine CAN-Bus-Verbindung ausgebildet. Die kommunikative Verbindung 100 dient einem Daten- bzw. Signalaustausch zwischen den beiden Steuergeräten 9, 95.

Speziell sind im Ausführungsbeispiel gemäß Fig. 1a in den Hydraulikleitungen des ersten Bremskreises BK1 sowie des zweiten Bremskreises BK2 keine Ventile angeordnet.

Zudem ist ein Druckgeber p/U in der Hydraulikleitung vorgesehen, der zwischen dem Trennventil PD1 und dem ersten bzw. zweiten Bremskreis BK1, BK2 angeordnet ist. Dieser Druckgeber p/U dient insbesondere bei einem Fehlerfall (vergleiche nachfolgende Ausführungen) zur Bereitstellung von Druckinformationen über die Bremskreise BK1, BK2 zu einer Druckeinstellung in den Bremskreisen BK1, BK2.

Eine Information über den mittels der ersten Druckversorgungseinheit 6 eingestellten Druck erfolgt in dieser Ausführungsform alternativ zum Druckgeber p/u über Druckschätzung über einen Motordrehwinkelgeber α/U und/oder den Motorstrom i/u.

Fig. 1b zeigt ein Prinzipschaltbild eines zweiten Ausführungsbeispiels des Bremssystems 2 mit der ersten Druckversorgungseinheit 6 gemäß der ersten Ausführungsform.

Im Wesentlichen entspricht dieses Ausführungsbeispiel dem zuvor genannten Ausführungsbeispiel des Bremssystems 2 gemäß Fig. 1a. Ein Unterschied besteht hierbei darin, dass in der Hydraulikleitung zu den Bremskreisen BK1, BK2 jeweils ein Trennventil BP1, TV_{BK2} angeordnet ist. Mittels dieser beiden Trennventile BP1, TV_{BK2} ist speziell in einem Fehlerfall eine Einstellung eines bremskreisindividuellen Bremsdruckes möglich.

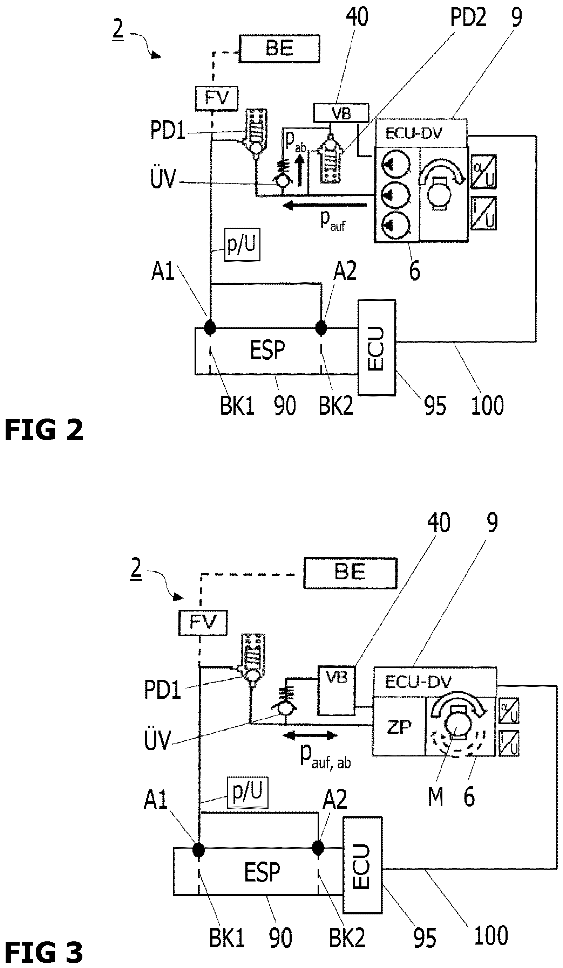

In Fig. 2 ist ein Prinzipschaltbild des ersten Ausführungsbeispiels des Bremssystems 2 mit der ersten Druckversorgungseinheit 6 gemäß einer zweiten Ausführungsform dargestellt. Dieses Ausführungsbeispiel des Bremssystems 2 entspricht ebenfalls im Wesentlichen der Ausgestaltung des Bremssystems 2 gemäß Fig. 1a. Die erste Druckversorgungseinheit 6 ist jedoch im Ausführungsbeispiel gemäß Fig. 2 als eine Rotationspumpe und speziell als eine einkreise Kolbenpumpe, insbesondere Pumpe mit 1 oder mehreren, insbesondere 3 Kolben ausgebildet. Die Kolbenpumpe ist vergleichbar zu ESP-Pumpenantrieben ausgeführt, bei der der/die Kolben über einen Exzenter durch eine Welle eines Elektromotors angetrieben werden. In dieser Ausgestaltung ist zur Ermöglichung des Druckaufbaus bzw. Druckabbaus zusätzlich ein Ventil PD2 vorgesehen. Beim Druckaufbau kann das PD2-Ventil vorteilhafterweise auch dazu eingesetzt werden, um Druckpulsationen einer über einen Exzenter angetriebene Pumpe auszugleichen. Die Druckpulsationen sind insbesondere bei einer 1-Kolbenpumpe sehr hoch.

Das Bremssystem 2 gemäß dem ersten Ausführungsbeispiel mit einer ersten Druckversorgungseinheit 6 gemäß einer dritten Ausführungsform, wie sie in Fig. 3 dargestellt ist, entspricht ebenso bis auf die Ausgestaltung der ersten Druckversorgungseinheit 6 dem Bremssystem 2 gemäß Fig. 1a. Im Ausführungsbeispiel gemäß Fig. 3 ist die erste Druckversorgungseinheit 6 als eine Zahnradpumpe ausgebildet. Die Bereitstellung einer Information über den von der Druckversorgungseinheit 6 bereitgestellten Druck erfolgt in diesem Ausführungsbeispiel alternativ zum Druckgeber p/u über Druckschätzung über einen Motordrehwinkelgeber α/U und/oder den Motorstrom i/u. Aufgrund der mechanischen und funktionalen Ausgestaltung der Zahnradpumpe ist in diesem Ausführungsbeispiel kein Ventil PD2 notwendig, da durch die Zahnradpumpe durch Umkehr der Drehrichtung, z.B. durch Ausführung des Antriebsmotors der Zahnradpumpe als über ein B6-Brückenschaltung betriebener bürstenloser Elektromotor und Betrieb des Elektromotors im 4-Quadrantenbetrieb auch Druck abgebaut werden kann. Zudem sind prinzipbedingt die Druckpulsationen deutlich geringer als bei einer Exzenterkolbenpumpe.

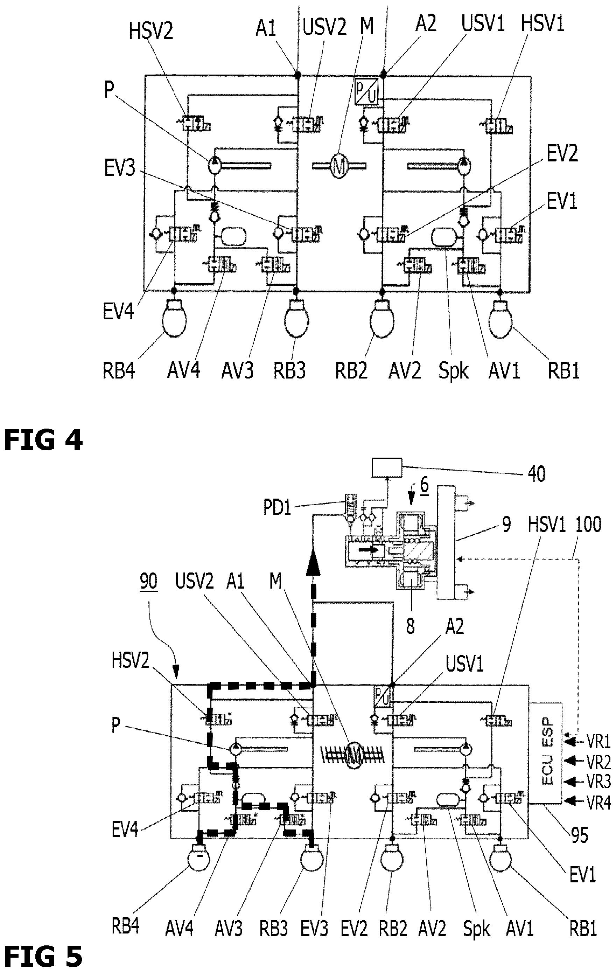

Fig. 4 zeigt ein Prinzipschaltbild einer dritten Druckversorgungseinheit 90 (auch als ESP-Einheit bezeichnet) mit der Motor-Pumpen-Einheit 91 zur Verwendung in dem erfindungsgemäßen Bremssystem 2. Die ESP-Einheit ist bekannt mit den Hauptkomponenten Pumpe P mit Motor M, den Ventilen HSV1 und HSV2, USV1 und USV2, den den Radbremsen RB1, RB2, RB3, RB4 zugeordneten Einlass- und Auslassventilen EV1 bis EV4 und AV1 bis AV4, und je einer Speicherkammer (SpK) pro Bremskreis. In vielen Publikationen und Patentanmeldungen ist dieses System beschrieben. Es ist bereits als 2-Box-Bremssystem "E-Booster + ESP" auf dem Markt und wird vor allem in E- und Hybrid-Fahrzeugen eingesetzt. In dieser Anwendung werden über den e-Booster über eine CAN-Schnittstelle nur die Auslassventile der ESP-Einheit in Zusammenwirken mit dem Bremsmoment des Generators, d. h. Rekuperation zur Vermeidung von Bremsdruckaufbau in den Radbremsen angesteuert und die Speicherkammer SpK zur Aufnahme von Druckmittel genutzt.

Ein Aspekt der Erfindung besteht darin, dass das erste Steuergerät 9 kommunikativ durch eine kommunikative Verbindung 100 mit dem zweiten Steuergerät 95 ("ECU-ESP") der ESP-Einheit in Verbindung steht und zur Erzielung von Sicherheitsaspekten zumindest die Einlassventile EV1 bis EV4 durch das erste Steuergerät 9 steuerbar sind.

Ein (weiterer) Aspekt der Erfindung besteht in dem radindividuellen Druckabbau unter Verwendung der Auslassventile AV1 bis AV4 und HSV-Ventile der ESP-Einheit.

In Fig. 5 ist ein Prinzipschaltbild der dritten Druckversorgungseinheit 90 (ESP-Einheit) während des Druckabbaus in einem ersten Fehlerfall beispielhaft in einem Bremskreis dargestellt. Unter dem ersten Fehlerfall kann hierbei verstanden werden, dass ein Motor M der dritten Druckversorgungseinheit 90 ausgefallen ist. In diesem Fall erfolgt ein Druckabbau zu Regelungszwecken über die erste Druckversorgungseinheit 6. Konkret erfolgt dies, in dem der Kolben der ersten Druckversorgungseinheit 6 zurückbewegt (in der Zeichenebene nach rechts, durch einen Pfeil gekennzeichnet) wird und ein Öffnen der im Normalzustand stromlos-geschossenen Auslassventile AV4 und AV3 sowie des Trennventils HSV2 erfolgt. Die in diesem Zustand für den Volumenfluss geöffneten Ventile sind zur Verdeutlichung des geöffneten Zustands in Fig. 5 (linke Hälfte der Fig. 5) jeweils mit einem Sternchen ("*") versehen. Nicht explizit ausgeführt ist der Zustand der anderen Magnetventile. So sind z.B. zumindest die Einlassventile EV1-EV4 bei Druckabbau durch aktive Bestromung geschlossen. In Fig. 5 ist speziell der Druckabbau aus den Radbremsen RB3 und RB4 exemplarisch gezeigt (die Fließrichtung des Druckmittels von den Radbremsen zu der ersten Druckversorgungseinheit 6 ist durch Pfeile gekennzeichnet). Erfindungsgemäß kann hierfür die Druckversorgungseinheit 90 mit Trennventilen HSV1, HSV2 ausgestatten sein, die entgegen der typischen Nutzung in ESP-Einheiten erfindungsgemäß bidirektional betrieben werden. Die Trennventile HSV1 und HSV2 werden auch dann verwendet, um in einem normalen ESP-Betrieb mit aktiver Pumpe Fluid aus dem Vorratsbehälter 40 nachzufördern. Auf Grund der gegeben Konfiguration kann bei geschlossenen Trennventilen USV1 und USV2 durch das Öffnen und Schließen von den Trennventilen HSV1 und HSV2 selektiv Druck aus den Radbremsen RB1 und RB2 bzw. RB3 und RB4 (nicht dargestellt) abgelassen werden. Eine radindividuelle Druckeinstellung kann durch ein entsprechendes Schalten der Auslassventile AV1 bis AV4 erfolgen

Im ersten Fehlerfall kann die Ansteuerung der Ventile, insbesondere der Trennventile USV1, USV2, HSV1, HSV2 und der Auslassventile AV1 bis AV4 auch durch das erste Steuergerät 9 und nicht wie im Normalfall durch das zweite Steuergerät 95 erfolgen. Die hierfür benötigten Steuersignale bei einer Steuerung durch das erste Steuergerät 9 werden hierbei mittels der kommunikativen Verbindung 100 zu der dritten Druckversorgungseinheit 90 übertragen. Im Normalbetrieb übernimmt jedoch - bei nicht vorhandenem Fehlerfall - das zweite Steuergerät 95 die Ansteuerung der Ventile. Unter dem Normalbetrieb kann hierbei ein beispielsweise zum Abbremsen eines Fahrzeugs benötigter Druckaufbau im Vergleich zu einem Druckaufbau zu Regelungszwecken (um ein Durchdrehen oder Blockieren des Rades zu verhindern) verstanden werden.

Die Einlassventile EV1 bis EV4 sind beim Druckabbau geschlossen (durch Bestromung). Durch das Öffnen des Trennventils HSV2 wird eine hydraulische Verbindung zur ersten Druckversorgungseinheit 6 ausgebildet, ein Abfließen des Druckmittels wird hierbei dann mittels der ersten Druckversorgungseinheit 6 und nicht, wie üblich, mittels der Pumpe P, unterstützt.

Der in Fig. 5 beispielhaft für zwei Radbremsen RB3, RB4 dargestellte und erläuterte Druckabbau kann alternativ auch bremskreisindividuell oder radbremsindividuell in analoger Weise erfolgen. Die radbremskreisindividuelle Regelung wird für den 4-Kanal-ABS-Betrieb sowie für Giermomenteingriffe (auch als Giermoment-Regelung(en) bezeichnet) eingesetzt.

Während dieser Regelung wird bevorzugt mittels des Druckgebers p/U in der ESP-Einheit ein Druck erfasst, sodass zu jedem Zeitpunkt eine Druckinformation zur Druckabbauregelung vorliegt.

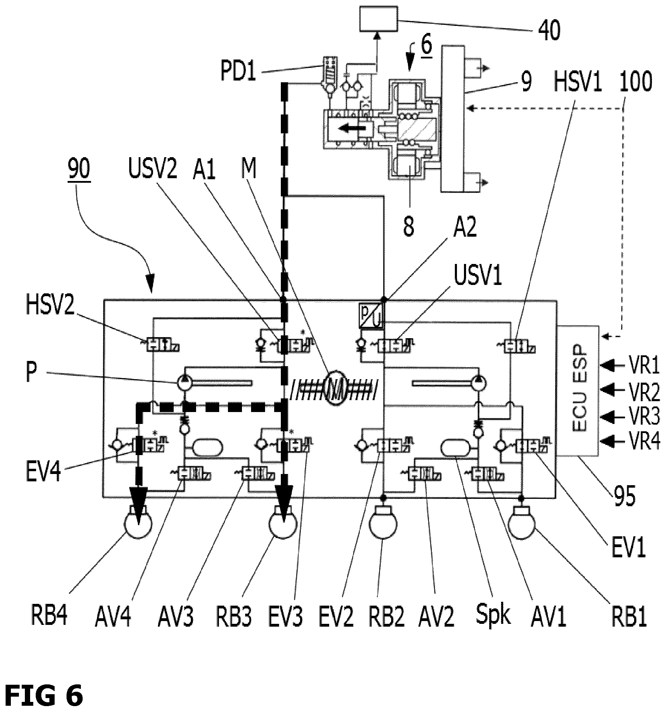

Ein Druckaufbau im ersten Fehlerfall ist beispielhaft durch das Prinzipschaltbild der dritten Druckversorgungseinheit 90 gemäß Fig. 6 dargestellt. In diesem Fall steuert das zweite Steuergerät 95 die Einlassventile EV1 bis EV4 der dritten Druckversorgungseinheit 90 wie im Normalbetrieb der dritten Druckversorgungseinheit 90. Die Auslassventile AV1 bis AV4 sind beim Druckaufbau (stromlos-)geschlossen. Zusätzlich wird während des Druckaufbaus das Ventil USV2 oder USV1 geöffnet, während die Ventile HSV1, HSV2 (stromlos-)geschlossen verbleiben. In Fig. 6 ist beispielhaft der Druckaufbau in den zwei Radbremsen RB3, RB4 gezeigt, sodass hierbei jeweils auf die sich innerhalb dieses Bremskreises BK1 befindlichen Trennventile HSV2 und USV2 Bezug genommen wird. Der in Fig. 6 beispielhaft für zwei Radbremsen RB3, RB4 dargestellte und erläuterte Druckaufbau kann alternativ auch bremskreisindividuell oder radbremsindividuell in analoger Weise erfolgen, wodurch ein radindividueller Druckaufbau und Giermomenteingriff erfolgen kann.

Das Trennventil PD1, sofern vorgesehen, welches die erste Druckversorgungseinheit 6 von den Bremskreisen BK1, BK2 trennt, wird beim Druckaufbau geöffnet betrieben. Die erste Druckversorgungseinheit 6 fördert Druckmittel durch die Hydraulikleitung in die Radbremsen RB3, RB4. Auch in diesem Ausführungsbeispiel wird der Druckgeber p/U, welcher gemäß Fig. 6 im zweiten Bremskreis BK2 angeordnet ist, zur Erfassung von Druckinformationen vorzugsweise herangezogen. Alternativ kann auch in diesem Ausführungsbeispiel die Steuerung der Ventile der dritten Druckversorgungseinheit 90 über die kommunikative Verbindung 100 durch das erste Steuergerät 9 übernommen werden.

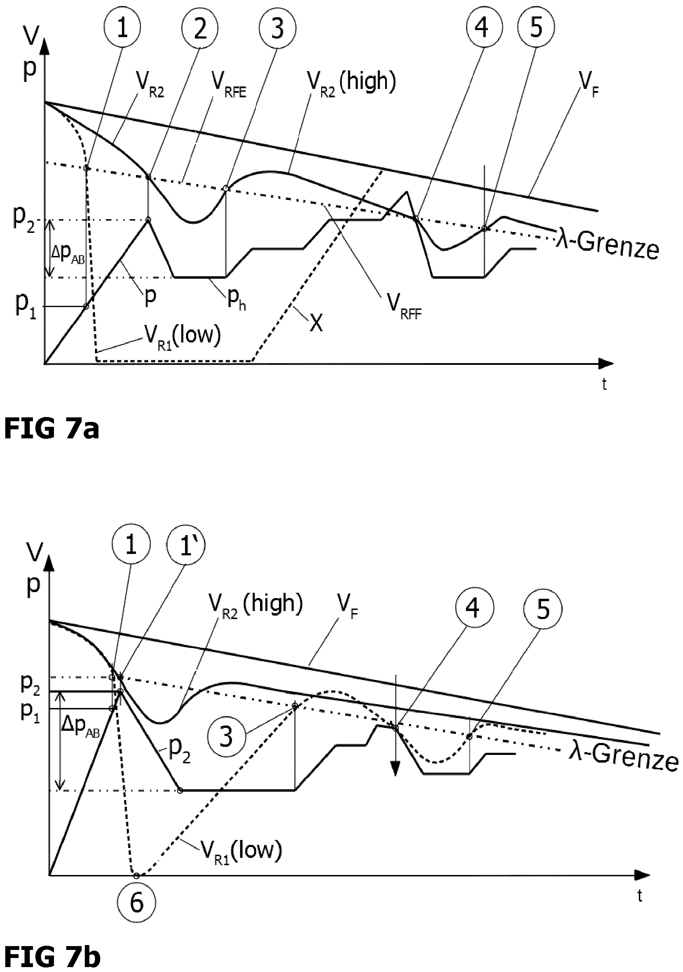

In den Figuren 7a und 7b ist jeweils ein zeitlicher Verlauf von Fahrzeuggeschwindigkeit V_{F}, Radumfangsgeschwindigkeit V_{R}, Referenzgeschwindigkeit V_{RFE}, Bremskreisdruck Pₕ für "high Rad", P_{L} für "low Rad" dargestellt. Der Schlupfwert λ ist die Radgeschwindigkeit, bei der ein Rad instabil wird und ist näherungsweise gleich der Referenzgeschwindigkeit V_{RFE}. In den Figuren 7a und 7b werden somit die typischen Kennwerte dargestellt, wie λ-Grenze bzw. (Referenzgeschwindigkeit V_{RFE}), Teilpunkt 1,1', 2, 4 für Druckabbau P_{ab} (Schlupfwert λ überschritten) und Zeitpunkte 3 und 5 für Druckaufbau P_{auf} (Schlupfwert λ unterschritten).

Bei homogenen Bedingungen (z.B. alle Fahrzeugräder befinden sich auf Asphalt) wird auf eine "select-low"-Regelung (Fig. 7b) geschaltet, d.h. es wird ein entsprechender Druck eingestellt, der so niedrig ist, dass kein Rad blockiert. Es wird somit auf ca. 20% der vollen Bremswirkung verzichtet.

Bei inhomogenen Bedingungen z.B. µ-Split, d.h. Räder eine Fahrzeugseite auf Eis, die andere Fahrzeugseite auf nasser oder trockener Straße, wirkt dann die "select-high"-Regelung (Fig. 7a), d.h. die nicht blockierenden Räder werden geregelt, die Räder auf niedrigen Reibwert bleiben blockiert. Auch hier wird auf ca. 20% der optimalen Bremswirkung verzichtet.

Wie bereits ausgeführt, zeigt Fig. 7a eine "select-high"-Regelung. Die Beschreibung der ABS-Regelung setzt die allgemeinen Grundlagen voraus, die aus Patentanmeldungen, Bremsenhandbüchern und Broschüren bekannt sind. So bildet sich durch die Reifenschlupfcharakteristik bei einem ansteigenden Bremsdruck ein Schlupf zwischen Fahrzeuggeschwindigkeit V_{F} und Radumfangsgeschwindigkeit V_{R} = Radschlupf. Bei einem von vielen Faktoren abhängigen Schlupfwert λ wird das Maximum der Reifenumfangskraft überschritten, was dann ohne Regelung zum Blockieren des Rades führt. Über den Regler, der die Radbeschleunigung (positiv und negativ) und den Schlupf λ auswertet, wird dann die Druckregelung mit Druckabbau P_{ab} und Druckaufbau P_{auf} wirksam zur gewünschten, optimalen Brems- und Seitenführungskraft. Vom Regler wird über komplexe Algorithmen ebenfalls eine Referenzgeschwindigkeit = λ-Grenze gebildet, welche dem optimalen Schlupf λ entspricht.

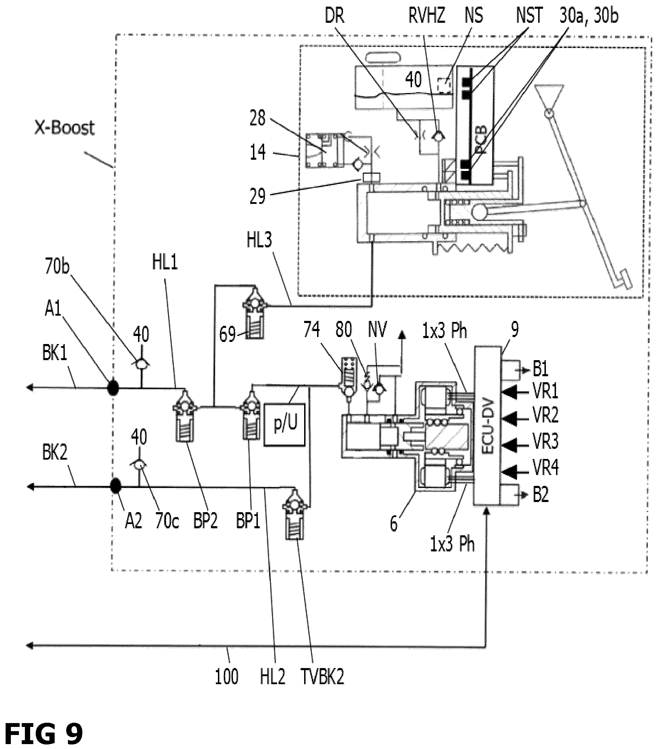

Konkret zeigt Fig. 7a somit einen beispielhaften Zeitablauf einer "select high"-Regelung in einem Bremskreis mit zwei Radbremsen. Zum Zeitpunkt 1 wird durch Druckaufbau P_{auf} mit der ersten Druckversorgungseinheit 6 bei Rad V_{R1} (auf Niedrigreibwert low-µ) beim Druck p₁ die Blockiergrenze erreicht, was zur Folge hat, dass dieses Rad bei weiterem Druckaufbau Pauf eine Radumfanggeschwindigkeit V_{R} = 0 erreicht und damit blockiert. In Folge wird der Druck weiter aufgebaut. Ein weiterer Druckaufbau P_{auf} bewirkt, dass kurz nach Überschreiten der λ-Grenze bei Druckniveau p₂ das Rad V_{R2} zum Zeitpunkt 2 ebenfalls instabil wird und die Radumfangsgeschwindigkeit V_{R2} stark abnimmt. In Folge wird über die Druckversorgung, z.B. durch eine Kolbenrückstellung der Druck reduziert. Der Druckunterschied ΔP der vorher ermittelten Drücke p₁ und p₂ wird ausgewertet. Ist der Druckunterschied ΔP = P₂ - P₁ signifikant, d.h. Druck p₂ ist mehr als 30% größer ist als Druck p₁, wird die "select-high"-Regelung (auch als selektive "high-µ"-Steuerung bezeichnet) eingeleitet. Der Druck wird dann moderat um Δp_{ab} = 20% in beiden Bremskreisen reduziert, d.h. die Kreistrennventile (BP1/BP2, TV_{BK2}; vgl. Fig. 9) werden nicht für einen selektiven Druckabbau genutzt und befinden sich im geöffneten Zustand.

Dies hat zur Folge, dass das Rad V_{R2} zum Zeitpunkt 3 nicht blockiert und die λ-Schlupfgrenze zum Zeitpunkt 3 wieder unterschreitet. Es folgt ab Zeitpunkt 3 ein stufenweiser Druckaufbau. In einer ersten Stufe wird der Druck z.B. um 70% des vorherigen Δp_{ab} -Wertes erhöht, in einem zweiten Schritt um weitere 30%, so dass der Druck p₂ wieder erreicht und in Folge überschritten wird. In dieser Phase wird der Druckgeber p/U vorzugweise zur Druckmessung eingesetzt. Zum Zeitpunkt 4 wird erneut die Schlupfgrenze überschritten. Dann wird der Druck wie zum Zeitpunkt 2 wieder reduziert und in Folge wieder in Stufen erhöht, so dass das Rad zum Zeitpunkt 5 die Schlupfgrenze wieder unterschreitet. Dieses Regelverfahren wird während der Regelung fortgesetzt.

Fig. 7b zeigt konkret einen beispielhaften Zeitablauf einer "select-low"-Regelung in einem Bremskreis mit zwei Radbremsen. Hierbei ist der Druckunterschied ΔP = P₂ - P₁ relativ gering im Bereich zwischen 10% und 20%. Dies hat zur Folge, dass die Räder mit geringen Druckunterschieden instabil werden. Dies ist ein Anzeichen für einen Betrieb auf einer homogenen Fahrbahn. Hier wird, wie vorher bei der "select-high"-Regelung beschrieben, der Druck um Δp_{ab} reduziert und in Stufen wieder erhöht. Im Gegensatz zur "select-high"-Regelung wird bei der "select-low"-Regelung der Druck jedoch stärker abgebaut, z.B. Δp_{ab} = 40%, so dass das low Rad zum Zeitpunkt 6 vom blockierten Zustand befreit wird, d.h. im Gegensatz zu "select-high"-Regelung wird kein Rad im blockierten Zustand betrieben. Der Druck wird so lange niedrig gehalten, bis zuerst Rad V_{R2} und dann das Rad V_{R1} zum Zeitpunkt 3 die λ-Grenze unterschreitet, erst dann wieder der Druck wieder in Stufen erhöht. Zum Zeitpunkt 4 erfolgt dann wird eine Überschreitung der Schlupfgrenze des Rades V_{R1} und der Druck wird wieder abgesenkt und anschließend in Stufen erhöht.

Fig. 7a und 7b zeigen nur das Allgemeine der "select-low"-/"select high"-Regelung. Es sind viele Erweiterungen denkbar, wie z.B. bei einer "select-high"- Regelung ein erneuter Test, wenn sich beim "high"-Rad das Druckniveau reduziert. Alternativ kann auch das "select-low"-Rad wieder ohne Regelung den blockierten Zustand verlassen und die λ-Grenze überschreiten. Dieser mögliche Radgeschwindigkeitsverlauf ist in Fig. 7a mit X bezeichnet. Danach kann wieder ein erneuter "select-low"-/"select-high"-Test stattfinden mit einer ggf. Umschaltung von einer "select-high"-Regelung auf eine "select-low"-Regelung.

In einem Ausführungsbeispiel wird, wie bereits erläutert, im zweiten Fehlerfall durch das erste Steuergerät 9 von einer "select-low"-Regelung zu einer "select-high"-Regelung geschaltet, wenn das erste Steuergerät 9 detektiert, dass sich das Fahrzeug auf einem inhomogenen Untergrund, z.B. einer teilweise vereisten Straße befindet. Hierfür ist es notwendig, dass das erfindungsgemäße Bremssystem 2 mittels der ersten Druckversorgungseinheit 6 unterschiedliche Drücke in den einzelnen Bremskreisen BK1, BK2 einstellen kann. Hierfür eignen sich besonders, die bereits anhand der Figuren 1b, 8 sowie 9 skizzierten Ausgestaltungen. Zur Umsetzung dieser Steuerstrategie überwacht das Steuergerät 9 die Drücke in den einzelnen Radbremsen RB1, RB2, RB3, RB4, die zu einem Blockieren der Räder führen. Weichen diese Drücke zwischen zwei Rädern, insbesondere innerhalb eines Bremskreises BK1, BK2 um mehr als 30% voneinander ab, so wird seitens des ersten Steuergeräts 9 von einem von einer "select-low"-Regelung zu einer "select-high"-Regelung geschaltet, um auch innerhalb des besagen Fehlerfalls noch ein sehr gutes Bremsergebnis zu erzielen.

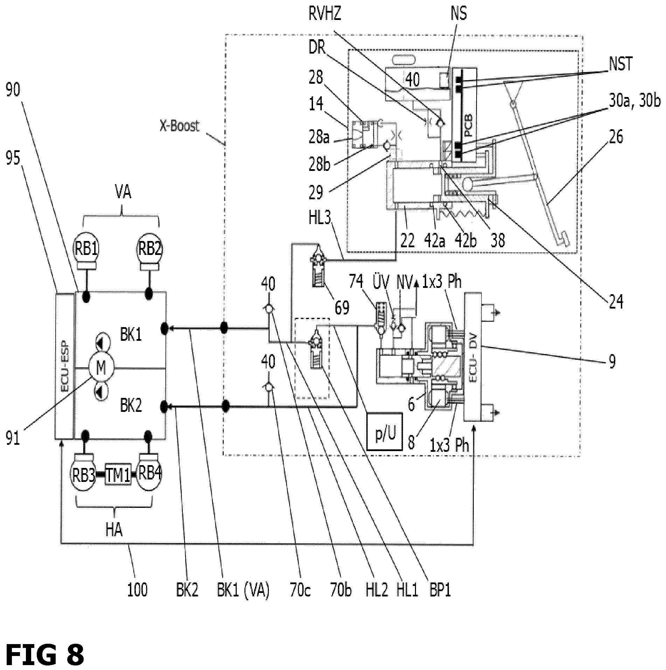

Fig. 8 zeigt ein Prinzipschaltbild eines Bremssystems 2, das ein erstes Modul (als X-Boost bezeichnet) und ein zweites Modul umfasst. Das erste Modul - der X-Boost - hat eine erste Druckversorgungseinheit 6 mit einem elektromotorischen Antrieb 8 sowie eine zweite Druckversorgungseinheit 14 mit einem Hauptbremszylinder 22 und eine Betätigungselement 26 mit Bremspedal. Weiterhin ist eine Ventileinrichtung mit diversen Magnet- und Rückschlagventilen vorgesehen.

Das zweite Modul und speziell die dritte Druckversorgungseinheit 90 umfasst eine elektrisch angetriebene Motor-Pumpen-Einheit 91 mit einer Pumpe mit einem elektromotorischen Antrieb. Bei der dritten Druckversorgungseinheit 90 kann es sich um eine beliebige ESP-Einheit handeln. Eine geeignete ESP Einheit ist in der DE 10 2014 205 645 A1 im Detail beschrieben. Alternativ kann als zweites Modul eine Standard-ABS-Einheit ohne ESP-Funktion eingesetzt werden.

Die beiden Module (X-Boost und ESP-Einheit) sind dazu eingerichtet, zwei Bremskreise BK1 und BK2 mit Druckmittel zu beaufschlagen, wobei die Module vorzugsweise hydraulisch in Serie geschaltet sind. In einem Ausführungsbeispiel ist der X-Boost an der Spritzwand eines Fahrzeuges befestigt, an welches das zweite Modul (ESP-Einheit) an zwei hydraulischen Schnittstellen bzw. Anschlusspunkten A1, A2 (vgl. dicke schwarze Punkte in der Fig. 8 bezüglich BK1, BK2) über hydraulische Leitungen angeschlossen wird.

Die erste Druckversorgungseinheit 6 ist über eine erste Hydraulikleitung HL1 mit dem ersten Bremsreis BK1 bzw. der entsprechenden Schnittstelle verbunden. Weiterhin ist eine zweite Hydraulikleitung HL2 zur Verbindung der ersten Druckversorgungseinheit mit dem zweiten Bremskreis bzw. der entsprechenden Schnittstelle vorgesehen.

Erfindungsgemäß hat die zweite Druckversorgungseinheit 14 des X-Boost nur einen Hauptbremszylinder 22 mit einem Kolben 24 und einer Kolbenkammer. Im Ausführungsbeispiel ist die zweite Druckversorgungseinheit 14 einkreisig ausgeführt und steht über eine dritte Hydraulikleitung HL3 und ein Einspeiseventil 69 mit dem Bremskreis BK1 bzw. der entsprechenden hydraulischen Schnittstelle in Verbindung. Eine fluide Verbindung zu der zweiten Hydraulikleitung HL2 führt über ein optionales (durch gestrichelte Umrandung verdeutlicht) erstes Trennventil BP1. Die zweite Druckversorgungseinheit 14 ist durch ein Schließen des Einspeiseventils 69 von den Bremskreisen BK1, BK2 derart abtrennbar, dass im normalen Brake-by-Wire Betrieb ohne Fehler (z.B. ohne Bremskreisausfall) das Betätigungselement 26 nur auf einen Wegsimulator 28 wirkt.

In dem Ausführungsbeispiel nach Fig. 8 sind die Bremskreise BK1 und BK2 über das optionale erste Trennventil BP1, wenn vorhanden, (vorzugsweise stromlos-offen) (auf)trennbar. Erfindungsgemäß kann somit bei einem Ausfall der ersten Druckversorgungseinheit 6 der Hauptbremszylinder 22 der zweiten Druckversorgungseinheit 14 entweder nur mit dem ersten Bremskreis BK1 oder mit dem ersten und dem zweiten Bremskreis BK1, BK2 durch Öffnen des ersten Trennventils BP1 verbunden werden. Für diesen Notbetrieb ist das Einspeiseventil 69 als stromlos-offenes Ventil ausgebildet. Soweit noch Strom anliegt, wird es geöffnet, so dass die zweite Druckversorgungseinheit 14 nicht mehr von den Bremskreisen BK1, BK2 hydraulisch entkoppelt ist.

Die erste Druckversorgungseinheit 6 wirkt ebenso wahlweise auf den zweiten Bremskreis BK2 (erstes Trennventil BP1 geschlossen) oder beide Bremskreise BK1, BK2 (erstes Trennventil BP1 geöffnet oder stromlos offen). Im Normalbetrieb ist das erste Trennventil BP1 offen, so dass die erste Druckversorgungseinheit 6 beide Bremskreise BK1, BK2 mit Druck versorgt und die zweite Druckversorgungseinheit 14 ist durch das geschlossene Einspeiseventil 69 vom ersten Bremskreis BK1 abgekoppelt. Wird festgestellt, dass Volumen aus den Bremskreisen BK1, BK2 verlorengeht, kann mittels des ersten Trennventils BP1 der Bremskreis BK1 von der ersten Druckversorgungseinheit 6 abgekoppelt werden, sodass bei einem Leck im ersten Bremskreis BK1 der zweite Bremskreis BK2 ohne Hydraulikmittelverluste weiterbetrieben werden kann.

Im Ausführungsbeispiel ist das Trennventil BP1 als Magnetventil ausgeführt, wobei der Kugelsitz des Trennventils BP1 über einen Anschluss (Ventilsitz-Anschluss) an den Abschnitt der Hydraulikleitung angeschlossen ist, der zu der ersten Druckversorgungseinheit 6 hinführt. Damit kann das Trennventil BP1 auch bei Ausfall des ersten Bremskreises BK1 durch Bestromung sicher geschlossen werden und wird nicht bei Betrieb der ersten Druckversorgungseinheit 6 durch höhere Drücke aufgedrückt.

Die zweite Druckversorgungseinheit 14 speist bei einer Betätigung des Betätigungselements 26 den Wegsimulator 28 über ein Schnüffelloch in einer Wandung des Hauptbremszylinders 22, sodass in Abhängigkeit einer Größe der Betätigung des Betätigungselements 26 ein progressiver haptischer Widerstand in Form einer Rückstellkraft spürbar ist. Unter der Größe der Betätigung kann hierbei verstanden werden, wie "fest und/oder wie weit" ein Fahrer das als Bremspedal ausgebildete Betätigungselement 26 betätigt und somit den Kolben 24 in den Hauptbremszylinder 22 schiebt. Der progressive haptische Widerstand wird auch als Pedalcharakteristik bezeichnet.

Zum Absperren der Verbindung zum Wegsimulator 28 kann ein Wegsimulator-Ventil 29 vorgesehen sein.

Die zweite Druckversorgungseinheit 14 weist zumindest eine Schnüffelbohrung 38 auf, die über Hydraulikleitungen mit einem Vorratsbehälter 40 verbunden ist. Der Vorratsbehälter 40 ist ebenfalls Teil des Bremssystems 2.

In dem Ausführungsbeispiel kann in der Hydraulikleitung zwischen der Schnüffelbohrung 38 und dem Vorratsbehälter 40 ein Rückschlagventil RVHZ sowie eine Drossel DR angeordnet sein. Mittels dieses Rückschlagventils RVHZ sowie der ersten Druckversorgungseinheit 6 ist es möglich, eine Diagnose über einen Erhaltungszustand von innerhalb der ersten Druckversorgungseinheit 6 sowie innerhalb des Wegsimulators 28 angeordneten Dichtelementen durchzuführen. Bei der Prüfung der Dichtung des Hauptbremszylinders 22 kann das Wegsimulator-Ventil 29 - soweit vorhanden - geschlossen werden.

Wie dargestellt weist der Hauptbremszylinder 22 zwei Dichtelemente 42a, 42b auf, die als Ringdichtungen ausgebildet sind. Die Schnüffelbohrung 38 ist zwischen den beiden Dichtelementen 42a, 42b angeordnet. In der Verbindung zwischen der Schnüffelbohrung 38, die zwischen den beiden Dichtelementen 42a, 42b angeordnet ist, und dem Vorratsbehälter 40 ist eine Drossel DR angeordnet.

Die Drossel DR ist im Hinblick auf ihre Durchflussmenge so dimensioniert, dass die Pedalcharakteristik bei Ausfall des Dichtelements 42a nicht wesentlich verändert wird (3 mm Pedalweg in 10 s). Zudem kann über die Drossel DR ein temperaturbedingter Volumenausgleich des Druckmittels erfolgen.

Bei einem ABS-Betrieb der dritten Druckversorgungseinheit 90 können hohe Druckspitzen in den Bremskreisen BK1 und BK2 entstehen, die die erste Druckversorgungseinheit 6 erheblich belasten können. Ein Druckbegrenzungsventil ÜV ist in der Ausgestaltungsvariante gemäß Fig. 8 über eine Bohrung mit der Kolbenkammer der ersten Druckversorgungseinheit 6 verbunden, damit die hohen Druckspitzen abgebaut werden und eine Schädigung des Systems vermieden wird.

Ein Saugventil NV steht ebenfalls mit der Kolbenkammer der ersten Druckversorgungseinheit 6 in fluider Verbindung und ermöglicht das Nachfördern von Druckmittel aus dem Vorratsbehälter 40. Somit kann die erste Druckversorgungseinheit 6 eigenständig zusätzliche Druckmittel in die Bremskreise BK1, BK2 einbringen. Ein zusätzlich vorgesehenes Schnüffelloch in dem Zylinder der ersten Druckversorgungseinheit 6 ermöglicht einen Volumenausgleich in der Anfangsposition des Kolbens der ersten Druckversorgungseinheit 6.

Die dritte Druckversorgungseinheit 90 ist in der Fig. 8 nur schematisch dargestellt. Sie versorgt letztendlich vier Radbremsen RB1, RB2, RB3 und RB4. In der schematischen Darstellung bedienen die Radbremsen RB1, RB2 eine Vorderachse VA des Fahrzeugs und die Radbremsen RB3 und RB4 eine Hinterachse HA des Fahrzeugs. An der Hinterachse HA des Fahrzeugs befindet sich ein Antriebselektromotor, um das Fahrzeug anzutreiben. Bei dem Fahrzeug kann es sich um ein reines Elektrofahrzeug oder um ein Hybridfahrzeug handeln.

Der erste Bremskreis BK1 ist mit den Radbremsen RB1 und RB2 verbunden und der zweite Bremskreis BK2 mit den Radbremsen RB3 und RB4. Für die in Fig. 8 dargestellte Hydraulikanordnung ist eine entsprechende Zuordnung vorteilhaft.

Die dritte Druckversorgungseinheit 90 verfügt weiterhin über ein Steuergerät 95 ("ECU-ESP").

Ebenso verfügt die zweite Druckversorgungseinheit 14 über eine Leiterplatine, die einen Niveausensor NST aufweist, der die Position eines magnetischen Schwimmers NS innerhalb des Vorratsbehälters 40 erfasst. Die PCB weist des Weiteren Sensoren 30a, 30b zur Erfassung des Pedalwegs sowie einer Wegdifferenz zwischen Kolben 24 und Pedalweg auf.

Für die Bereitstellung von zusätzlichem Druckmittel für die Dritte Druckversorgungseinheit 90 ist im ersten Bremskreis BK1 ein Saugventil 70b vorgesehen, welches die Pumpe der dritte Druckversorgungseinheit 90 mit dem Vorratsbehälter 40 verbindet.

Benötigt die Pumpe der dritten Druckversorgungseinheit 90 für den zweiten Bremskreis BK2 Druckmittel, so kann dieses aus dem Vorratsbehälter 40 über das Saugventil 70c bereitgestellt werden.

Somit sind die beiden Bremskreise BK1, BK2 durch die jeweiligen Hydraulikleitungen HL1, HL2 jeweils über ein Saugventil 70b bzw. 70c mit dem Vorratsbehälter 40 zum Ansaugen von Druckmittel verbunden. Um eine optimale Ansaugung des Druckmittels zu erreichen, weist das Saugventil 70c vorzugsweise einen Durchmesser im Bereich von 30 mm bis 50 mm und speziell einen Durchmesser von 40 mm auf.

Optional verfügt das Ausführungsbeispiel über eine Steuerung des Lüftspiels zwischen Bremsbelägen und Scheibenbremse. Die Radbremsen RB1, RB2, RB3, RB4 (vgl. Fig. 8) können als reibungsfreie Radbremsen RB1, RB2, RB3, RB4 ausgebildet sein. Bei einem Brake-by-Wire-System ermöglichen Scheibenbremsen mit Bremsbelägen, die mit einem Lüftspiel ohne Druck in der Bremsanlage in Abstand stehen, eine Verringerung des Reibwiderstands. Dies kann durch den Einsatz von Rollbackdichtungen, Rückstellfedern der Bremsbeläge oder aktives Rückziehen der Bremsbeläge durch Unterdruckerzeugung mittels Druckversorgung 6, wie in EP 2 225 133 von Anmelder ausgeführt, erreicht werden.

Mittels der ersten Druckversorgungseinheit 6 kann das im Betrieb sich veränderliche Lüftspiel in der Radbremse RB1, RB2, RB3, RB4 radindividuell oder bremskreisindividuell durch Auswertung des Druckverlaufes gemessen werden. Erfindungsgemäß kann eine entsprechende Messung im Service, aber auch während des Betriebs des Fahrzeuges erfolgen. Vorzugsweise wird die Messung im Fahrzeugstillstand oder nach einer Bremsung vorgenommen.

Mit den bekannten Lüftspielwerten der Radbremsen RB1, RB2, RB3, RB4 wird dann bei Aktivierung der Radbremse RB1, RB2, RB3, RB4 das Lüftspiel zuerst mittels einer Kolbenwegsteuerung der ersten Druckversorgungseinheit 6 schnell überwunden. Diesbezüglich ist der Einsatz eines bürstenlosen Motors als elektromotorischer Antrieb 8 der ersten Druckversorgungseinheit 6 mit kleiner Zeitkonstante zu bevorzugen, da das Überwinden des Lüftspiels realisiert werden kann, ohne dass der Fahrer dies beim Betätigen der Bremse wahrnimmt.

Zudem kann das Bremssystem 2 so gesteuert werden, dass der Fahrzeugelektromotor in der Phase des Lüftspiels wirkt. Somit wird unmittelbar bei Betätigung der Bremse eine Bremswirkung erzeugt.

In einem Ausführungsbeispiel der Erfindung werden Unterschiede in den Lüftspielen der Radbremsen RB1, RB2, RB3, RB4 ausgeglichen, indem Einlassventile EV1 bis EV4 des zweiten Moduls (ESP-Einheit) angesteuert werden und/oder der Elektromotor einer oder mehrerer Fahrzeugachsen zur Erzeugung einer Bremswirkung zum Beginn einer Bremsung genutzt wird. Mit dem Lüftspiel können allgemein Stick-Slip-Effekte von neuen Bremsanlagen bei geringen Geschwindigkeiten reduziert oder vermieden werden.

In einem Ausführungsbeispiel implementiert das erfindungsgemäße Bremssystem 2 bei einem Ausfall (Fehlerfall 4) der ESP-Einheit in einer sehr einfachen Variante eine Stotterbremse. Durch ein Vor- und Rückbewegen des Kolbens der ersten Druckversorgungseinheit 6 zwischen einem oberen und unteren Druckbereich wird ein Blockieren der Räder vermieden und die Lenkbarkeit aufrechterhalten. Bei dieser Form des Abbremsens sind im Vergleich zu einem 1-Kanal-ABS-Betrieb werden keine Messwerte, z.B. Druck und Radgeschwindigkeiten benötigt.

Die automatisierte Stotterbremse führt zu ausreichenden Bremswegen (ca. 200 % des Bremsweges bei ABS im Vergleich zu einem vollwertigen radindividuellen ABS) und akzeptabler Stabilität durch Aufrechterhalten der Lenkbarkeit.

Das erfindungsgemäße Bremssystem kann den entscheidenden Vorteil bereitstellen, dass das Bremspedal nur auf den Kolben 24 wirkt und von den Bremskreisen BK1, BK2 über das Einspeiseventil 69 getrennt ist. Somit kann beim X-Boost bzw. X-Booster die Funktion der automatisierten Stotterbremse durch den Fahrer im Vergleich zum Stand der Technik (WO2011/098178) nicht gestört werden.

Alternativ zur Stotterbremse kann ein 1-kanaliger ABS-Betrieb mit "select-low"-Regelung (Fehlerfall 3) umgesetzt werden. Dies führt zu einer weiteren Verschlechterung des Bremsweges (ca. 400% Bremsweg im Vergleich zum Bremsweg mit einem vollwertigen radindividuellen ABS), jedoch zu einer uneingeschränkten Fahrzeugstabilität und ist in dieser Charakteristik der Stotterbremse überlegen. Bei dieser Form des 1-Kanal-ABS-Betriebs werden Messwerte wie z.B. Druck und Radgeschwindigkeiten benötigt, die über eine kommunikative Verbindung/Schnittstelle, z.B. CAN-Schnittstelle von der ESP-Einheit eingelesen werden können.

Um die Verfügbarkeit des erfindungsgemäßen Bremssystems 2 gemäß Fig. 8 weiter zu erhöhen, ist der elektromotorische Antrieb 8 der ersten Druckversorgungseinheit 6 über zwei redundante Dreiphasenstränge an die Steuereinheit 9 (ECU-DV) des X-Boosts angeschlossen und die Elektronik ist (teil)redundant ausgeführt. Beispielsweise können zwei B6-Brücken für jeden Strang vorgesehen sein. Zudem ist die Elektronik in zumindest einem Ausführungsbeispiel an zwei redundante Spannungsversorgungen angeschlossen. Damit kann die Ausfallwahrscheinlichkeit des elektromotorischen Antriebs 8 um den Faktor 4-10 reduziert werden und der Fehlerfall (Ausfall der ersten Druckversorgungseinheit 6) weiter deutlich reduziert werden.

Das Steuergerät 95 der ESP-Einheit 90 sowie die Steuereinheit 9 (ECU-DV) des X-Boosts sind über die kommunikative Verbindung 100, beispielsweise ein CAN-Bus, miteinander verbunden. Insofern ist es möglich, Steuerbefehle an die dritte Druckversorgungseinheit 90 abzusetzen, die eine Betätigung des Antriebs 91 und/oder der vorgesehenen Ventile (vgl. auch Fig. 8) verursachen.

Mit dem Bremssystem 2 nach Fig. 8 können folgende sicherheitsrelevante Redundanzen realisiert werden:
- Sicherstellung einer ausreichenden Bremswirkung zur Erfüllung der gesetzlichen Anforderungen bei Bremskreisausfall, Ausfall a) der zweiten Druckversorgungseinheit 14, b) der ersten Druckversorgungseinheit 6 oder c) ersten Druckversorgungseinheit 6 und der dritten Druckversorgungseinheit 90 (gleichzeitig), d. h. auch Erfüllung gesetzlicher Anforderungen bei Doppelfehlern:
   ∘ Fehlerfall 1 - Ausfall der dritten Druckversorgungseinheit 90: Verzögerung durch Bremskraftverstärkung über die erste Druckversorgungseinheit 6 in beiden Bremskreisen BK1, BK2;
   ∘ Fehlerfall 2 - Ausfall der dritten Druckversorgungseinheit 90 und des Bremskreises BK1: Verzögerung durch Bremskraftverstärkung über erste Druckversorgungseinheit 6, z. B. an der Hinterachse;
   ∘ Fehlerfall 3 - Ausfall der dritten Druckversorgungseinheit 90 und des zweiten Bremskreises BK2: Verzögerung durch die zweite Druckversorgungseinheit 14, z. B. an der Vorderachse (erstes Trennventil BP1 geschlossen)
   ∘ Fehlerfall 4 - Ausfall der ersten Druckversorgungseinheit 6: Verzögerung durch Bremskraftverstärkung über die dritte Druckversorgungseinheit 90;
   ∘ Fehlerfall 5 - Ausfall der ersten Druckversorgungseinheit 6 und des ersten Bremskreises BK1 oder des zweiten Bremskreises BK2: Verzögerung durch Bremskraftverstärkung über die dritte Druckversorgungseinheit 90 in einem der Bremskreise BK1, BK2, ggf. unterstützt durch Fahrzeugelektromotor an einer Achse;
   ∘ Fehlerfall 6 - Ausfall der ersten Druckversorgungseinheit 6 und der dritten Druckversorgungseinheit 90: Bremsen durch Hauptbremszylinder an Vorderachse VA und optional durch Antriebselektromotor an Hinterachse HA;
   ∘ Fehlerfall 7 - Ausfall des Bordnetzes: Bremsen durch zweite Druckversorgungseinheit 14 ggf. an Vorderachse VA und Hinterachse HA;
- Elektronische Bremskraftverteilung (EBV) bei Ausfall der ESP-Einheit durch Druckerzeugung im ersten Bremskreis BK1 über dritte Druckversorgungseinheit 90 und Druckerzeugung im zweiten Bremskreis BK2 über die erste Druckversorgungseinheit 6 bei geschlossenem ersten Trennventil BP1 und Steuerung der ersten Druckversorgungseinheit 6 über Sensorik der zweiten Druckversorgungseinheit 14. Hierzu ist eine S/W-Bremskreisaufteilung erforderlich, d. h. am ersten Bremskreis BK1 sind die Räder der Vorderachse VA, am zweiten Bremskreis BK2 die Räder der Hinterachse HA angeschlossen;
- Steuerung des Lüftspiels zwischen Bremsbelägen und Scheibenbremse;
- 4-Kanal-ABS-Betrieb und/oder einer Giermomentregelung bei Ansteuerung der Ventile der ESP-Einheit;
- 1-Kanal-ABS-Betrieb oder Realisierung einer automatisierten Stotterbremse.

Fig. 9 zeigt eine alternative Ausgestaltung des X-Boosts gemäß Fig. 8. Im Unterschied zu dem Ausführungsbeispiel gemäß Fig. 8 ist in Fig. 9 in der zweiten Hydraulikleitung HL2 ein zweites Trennventil TVBK2 vorgesehen. Dieses zweite Trennventil TVBK2 ermöglicht es, den zweiten Bremskreis BK2 von der ersten Druckversorgungseinheit 6 hydraulisch zu entkoppeln. Somit kann die erste Druckversorgungseinheit 6 selektiv Druckmittel im ersten Bremskreis BK1 oder im zweiten Bremskreis BK2 oder in beiden Bremskreisen bereitstellen. Bei der Detektion von Volumenverlust im zweiten Bremskreis BK2 kann dieser abgekoppelt werden.

Weiterhin unterscheidet sich das Ausführungsbeispiel gemäß Fig. 9 darin, dass in der ersten Hydraulikleitung HL1 zwischen dem ersten Trennventil BP1 und dem ersten Anschlusspunkt A1 für den ersten Bremskreis BK1 ein drittes Trennventil BP2 vorgesehen ist. Vorzugsweise ist dieses dritte Trennventil BP2 so angeordnet, dass die dritte Hydraulikleitung in einer hydraulischen Verbindung zwischen dem ersten Trennventil BP1 und dem dritten Trennventil BP2 in die erste Hydraulikleitung HL1 einmündet. Das dritte Trennventil BP2 ermöglicht es, den ersten Bremskreis BK1 hydraulisch sowohl von der ersten Druckversorgungseinheit 6 sowie von der zweiten Druckversorgungseinheit 14 abzukoppeln. Somit ist es möglich, bei ausgefallener erster Druckversorgungseinheit 6 Druckmittel ausgehend von der zweiten Druckversorgungseinheit 14 über das Einspeiseventil 69, das erste Trennventil BP1 und das zweite Trennventil TV_{BK2} in den zweiten Bremskreis BK2 einzubringen. Wenn das dritte Trennventil BP2 verschlossen ist, wird kein Druckmittel in den ersten Bremskreis BK1 abgegeben.

Mit dem Bremssystem 2 nach Fig. 9 können folgende sicherheitsrelevante Redundanzen realisiert werden:
- Sicherstellung einer ausreichenden Bremswirkung bei Ausfall der einen oder der mehreren Druckversorgungseinheiten,
   ∘ Fehlerfälle 1-7: siehe Ausführungsform 1;
   ∘ Fehlerfall 8 - Ausfall des Einspeiseventils 69 (z.B. undicht) oder Ausfall der elektrischen Ansteuerung: Verschluss der dritten Hydraulikleitung HL3 durch die Trennventile BP1 und BP2, so dass der Wegsimulator 28 voll wirksam ist; erste Druckversorgungseinheit 6 stellt in Bremskreis BK2 und/oder ESP-Einheit stellt in beiden Bremskreisen BK1 und BK2 Raddrücke ein,
   ∘ Weiterer Freiheitsgrad: wahlweises Einspeisen des Druckes des Hauptbremszylinders in Bremskreis BK1 oder BK2 bei Ausfall eines Bremskreises;
- Sicherstellung einer 4-Kanal-ABS-Regelung und/oder einer Giermomentregelung bei Ansteuerung der Ventile der ESP-Einheit,
- 2-Kanal-ABS-Betrieb nach dem Select-Low und Select-High-Verfahren oder 1-Kanal-ABS nach dem Select-low-Verfahren mit Raddrehzahlsensoren;
- Elektronische Bremskraftverteilung (EBV) bei Ausfall ESP-Einheit durch Druckerzeugung in Bremskreis BK1 über die zweite Druckversorgungseinheit 14 und Druckerzeugung im Bremskreis BK2 über die erste Druckversorgungseinheit 6 bei geschlossenem ersten Trennventil BP1 und Steuerung der Druckversorgung über die Sensorik der zweiten Druckversorgungseinheit 14. Hierzu ist S/W-Bremskreisverteilung notwendig und die Bremskraftverteilung in die Bremskreise wird über die Trennventile BP1, BP2 und TVBK2 gesteuert. Erfindungsgemäß kann der Kolben der ersten Druckversorgungseinheit 6 in Vor- und Rückhubbewegung zur Anlegung eines geeigneten Druckes gesteuert werden. Optional kann eine Druckeinstellung über eine PWM-Steuerung der Ventile, insbesondere der Trennventile erfolgen;
- Lüftspielsteuerung ist in Ausführungsbeispiel nach Fig. 8 bereits ausgeführt. Das Ausführungsbeispiel nach Fig. 9 bietet das zusätzliche Potential, das ungleiche Lüftspiel in den Radbremsen RB1, RB2, RB3, RB4 der Bremskreise BK1, BK2 durch entsprechende Vorsteuerung vor dem Bremskraftverstärkerbetrieb durch sequentielle Öffnung der Trennventile BP1, TV_{BK2} auszugleichen. Alternativ kann auch der PWM-Betrieb eingesetzt werden, sodass sich unterschiedliche Durchflussquerschnitte zu den Bremskreisen BK1, BK2 einstellen und damit simultan das ungleiche Lüftspiel ausgeglichen werden kann. Hier eignet sich eine S/W-Bremskreisaufteilung. Dieses Verfahren ist einfach möglich, weil die Bremskreistrennventile Bestandteil des X-Boost-Moduls sind und ohne Zeitverzug und Fehleranfälligkeit (z. B. Nutzung einer Schnittstelle zwischen X-Boost und ESP-Einheit) umgesetzt werden können. So kann z.B. die Bremsanlage derart gestaltet werden, dass an der Vorderachse an den Bremsbelägen kein Lüftspiel vorgesehen ist und an der Hinterachse ein Lüftspiel vorgesehen ist. So führt auch ein Ausfall der ersten Druckversorgungseinheit 6 nicht zu einem Zeitverzug der Bremsung, wenn Druck durch die Betätigungseinheit erzeugt wird und erfindungsgemäß auf die Radbremsen RB1, RB2, RB3, RB4 der Vorderachse VA wirkt. Zudem kann mit der Vorderachse VA eine größere Bremswirkung erzeugt werden.

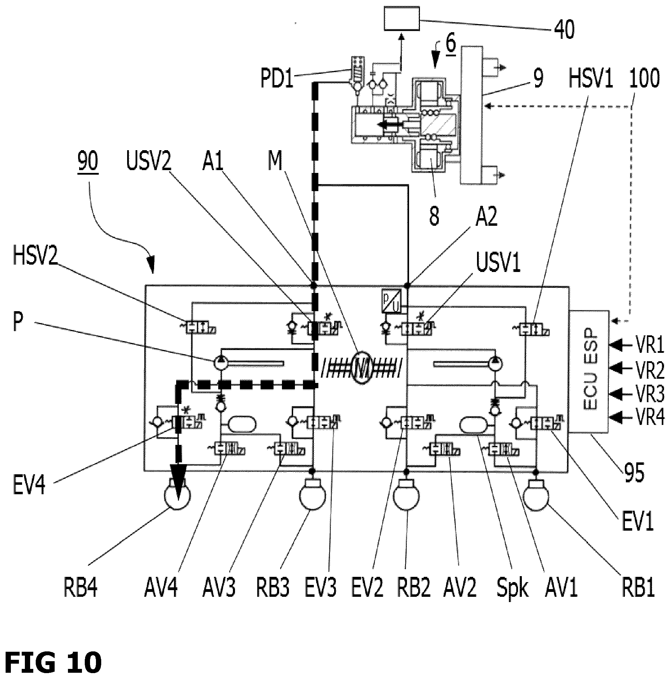

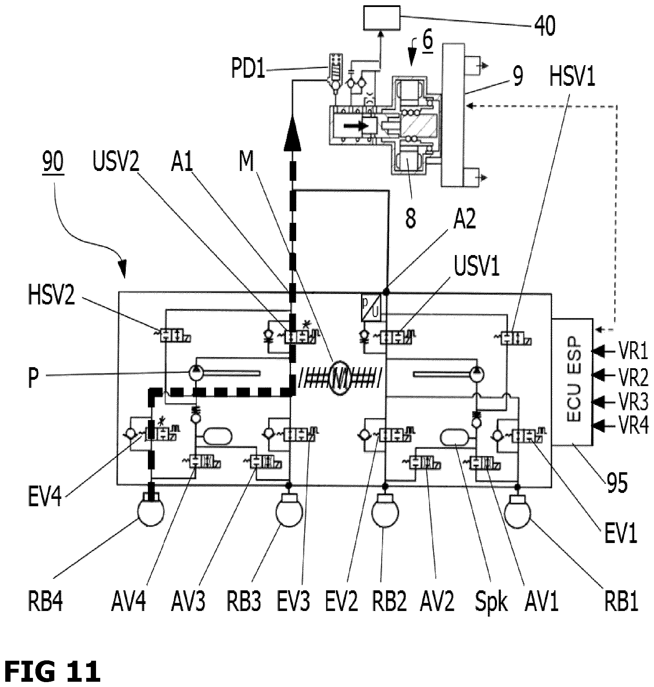

In den Fig. 10 und 11 ist jeweils ein Prinzipschaltbild der dritten Druckversorgungseinheit (ESP-Einheit) während eines Druckabbaus (vgl. Fig. 11) beziehungsweise eines Druckaufbaus (vgl. Fig. 11) im ersten Fehlerfall bei einer Giermomentregelung gezeigt. Im Grunde erfolgt hierbei die Regelung ähnlich dem im ersten Fehlerfall ebenfalls möglichen 4-Kanal-ABS. Bei der Giermomentregelung erfolgt jedoch - als Unterschied zur 4-Kanal-ABS-Regelung - sowohl der Druckabbau als auch der Druckaufbau über die Einlassventile EV1-EV4 sowie USV-Ventile. Sowohl in Fig. 10 als auch in Fig. 11 sind für den Durchfluss relevante geöffnete Ventile jeweils mit einem Sternchen (*) versehen. Nicht explizit ausgeführt ist der Zustand der anderen Magnetventile. So sind z.B. zumindest die Einlassventile EV2, EV3, EV4 bei Druckabbau durch aktive Bestromung geschlossen. Sofern es sich bei den Ventilen um mittels eines PWM-Signals ansteuerbare Ventile handelt, kann im Sinne dieser Anmeldung unter geöffnet auch verstanden werden, dass diese Ventile unter Ansteuerung mit einem PWM-Signal angesteuert werden, sodass sie ein vorgegebener Öffnungsquerschnitt einstellt. Somit ist durch die Ansteuerung der Ventile mittels eines PWM-Signals eine Durchflussmenge durch das jeweilige Ventil steuerbar. Konkret werden in den Fig. 10 und 11 die Einlassventile EV1-EV4 und die Ventile USV1, USV2 mittels eines PWM-Signals ansteuerbar. Somit ist in den nachfolgend beschriebenen Situationen eine Durchflussmenge durch diese Ventile regelbar bzw. steuerbar.

In Fig. 10 ist exemplarisch eine radselektive Giermomentregelung bei einem Druckaufbau in der Radbremse RB4 gezeigt. Hierzu wird das der jeweiligen Radbremse, hier der Radbremse RB4 zugeordnete Einlassventil EV1 sowie das dem jeweiligen Bremskreis, hier dem ersten Bremskreis BK1 zugeordnete Trennventil USV2 mit Druckmittel durchströmt. Die Ventile müssen in dieser Ausführungsform nicht aktiv angesteuert werden, da sie passiv im stromlos offenen Zustand offen sind und bidirektional einen Volumenfluss des Druckmittels zulassen. Für die selektive Druckerzeugung in einer Radbremse RB4 werden die anderen Einlassventile EV1-EV3, über die kein Druck aufgebaut werden soll (RB1-RB3) derart angesteuert, dass die Magnetventile vom offenen Zustand in den bestromt geschlossenen Zustand übergeführt werden. Unter Ansteuern bei einem stromlos offenen Ventil in diesem Sinne kann verstanden werden, dass die Einlassventile EV1-EV3 geschlossen, also nicht Druckmittel durchleitend geschaltet werden. Ebenfalls sind die HSV-Ventile für die selektive Druckerzeugung in der Radbremse RB4 geschlossen, also nicht Druckmittel durchleitend geschaltet.

Somit erfolgt eine Druckbeaufschlagung von der ersten Druckversorgungseinheit 6 über das Trennventil USV2 und das Einlassventil EV4 ausschließlich zur Radbremse RB4 (durch einen Pfeil schematisch angedeutet). Ergänzend zu einer Radbremse RB1, RB2, RB3, RB4 kann ein Giermoment in mehreren Radbremsen RB1, RB2, RB3, RB4 erzeugt werden. Dazu werden jeweils diejenigen Einlassventile EV1-EV4 in den Radbremsen RB1, RB2, RB3, RB4 geschlossen, über die kein Druck aufgebaut werden soll. Mit dieser Erweiterung kann ein Giermoment in z.B. 2 Radbremsen RB1, RB2, RB3, RB4 einer Fahrzeugseite gleichzeitig erzeugt werden. Da Bremskreise typischerweise Schwarz/Weiß oder Diagonal ausgeführt sind, wird dann folglich je eine Radbremse RB1, RB2, RB3, RB4 eines Bremskreises mit Druck beaufschlagt. Eine weitere mögliche Erweiterung der Giermomentregelung ist durch sequentiellen oder simultanen Multiplexbetrieb der Kreistrennventile BP1/BP2 und TV_{BK2} des ersten Moduls (Ausführungsform gemäß Fig.9) möglich. Damit kann ein Druck in einer Radbremse RB1, RB2, RB3, RB4 (z.B. RB4 des rechten Hinterrades) auf ein Druckniveau geführt werden, wobei bei Erreichen des Druckventils das Kreistrennventil TV_{BK2} zum Druckhalten geschlossen wird.

Zudem kann in einer Radbremse RB1, RB2, RB3, RB4 des anderen Bremskreises (z.B. RB2 des rechten Vorderrades) ein anderes Druckniveau eingestellt werden, wobei zum Halten des Druckes das zweite Bremskreistrennventil BP1 oder alternativ BP2 geschlossen wird. Die Bremskreistrennventile BP1/BP2 und TV_{BK2} sind erforderlich zum Druckhalten, da die Einlassventile der Radbremsen RB1, RB2, RB3, RB4 parallel geschaltet Rückschlagventile aufweisen. Damit ist ein Druckhalten im zweiten Modul (ESP-Einheit) nicht möglich, wenn der Druck abgebaut ist, bzw. wenn im zweiten Bremskreis ein niedrigeres Druckniveau eingestellt wird.

Somit ergeben sich für die relevanten Ventile der dritten Druckversorgungseinheit 90 für den Druckaufbau gemäß Fig. 10 folgende Zustände:
HSV1: geschlossen (unbestromt)
HSV2: geschlossen (unbestromt)
EV4: geöffnet (unbestromt geöffnet oder per PWM-Verfahren bestromt, d.h. teilweise geöffnet)
EV1-EV3: geschlossen (bestromt)
Alle übrigen Ventile im hydraulischen, insbesondere unbestromten Ausgangszustand

Im Fall des Druckabbaus, wie beispielsweise in Fig. 11 gezeigt, erfolgt in analoger, jedoch umgekehrter Weise die Rückführung von Druckmittel von der Radbremse RB4 über das Einlassventil EV4 und das Trennventil USV2 zur ersten Druckversorgungseinheit 6. Analog erfolgt dann der Druckabbau auch bei Giermomenteingriffen in mehreren Radbremsen. Auch hier wird vorzugsweise das Multiplexverfahren eingesetzt.

Ergänzend können in einer Ausführungsform auch mehrere, insbesondere alle vier Radbremsen RB1, RB2, RB3, RB4 individuell und radselektiv in analoger Weise angesteuert werde und somit eine radselektive Giermomentregelung implementiert werden. Alternativ oder ergänzend hierzu kann in einer Ausführungsform die Giermomentregelung bremskreisselektiv erfolgen, sodass zwei Radbremsen eines Bremskreises jeweils gemeinsam angesteuert werden.

Konkret ergeben sich somit für die relevanten Ventile der dritten Druckversorgungseinheit 90 für den Druckabbau gemäß Fig. 11 folgende Zustände:
HSV1: geschlossen (unbestromt)
HSV2: geschlossen (unbestromt)
EV4: geöffnet (unbestromt geöffnet oder per PWM-Verfahren bestromt, d.h. teilweise geöffnet
USV1: geschlossen (bestromt geschlossen)
EV1-EV3: geschlossen (bestromt)
Alle übrigen Ventile im hydraulischen, insbesondere unbestromten Ausgangszustand

Nachfolgend sind einige Aspekte der Erfindung zusammengefasst:
1. Bremssystem (2) mit
   - einem ersten Modul, umfassend einer ersten Druckversorgungseinheit (6) mit einem elektromotorischen Antrieb (8), eine optionale zweite Druckversorgungseinheit (14) und ein erstes Steuergerät (9) zur Steuerung der ersten Druckversorgungseinheit (6), wobei das erste Modul dazu eingerichtet ist, zumindest einen ersten Bremskreis (BK1) über einen ersten Anschlusspunkt (A1) und zumindest einen zweiten Bremskreis (BK2) über einen zweiten Anschlusspunkt (A2) mit einem Druckmittel zu beaufschlagen, wobei den Bremskreisen (BK1, BK2) Radbremsen (RB1, RB2, RB3, RB4) zugeordnet sind,
   - einem zweiten Modul, umfassend eine dritte Druckversorgungseinheit (90), insbesondere eine Motor-Pumpen-Einheit (91), Trennventile (USV1, USV2, HSV1, HSV2) sowie Bremsdruckeinstellventile, insbesondere Auslass- (AV1, AV2, AV3, AV4) und Einlassventile (EV1, EV2, EV3, EV4), zur Einstellung eines Drucks in den Radbremsen (RB1, RB2, RB3, RB4) und ein zweites Steuergerät (95) zur Steuerung der Bremsdruckeinstellventile (AV1-AV4, EV1-EV4),
   - eine Detektionseinheit zur Detektion eines ersten Fehlerfalls, insbesondere eines zu mindestens teilweisen Ausfalls der dritten Druckversorgungseinheit (90), wobei das Bremssystem (2) dazu eingerichtet ist, im ersten Fehlerfall zur Bereitstellung einer ABS-Funktion und/oder eines Giermomenteingriffs eine (radindividuelle und/oder selektive) Einstellung der Drücke in den Radbremsen unter Ansteuerung mindestens eines der Bremsdruckeinstellventile (AV1-AV4, EV1-EV4) des zweiten Moduls und/oder der Trennventile (USV1, USV2, HSV1, HSV2) des zweiten Moduls und der ersten Druckversorgungseinheit (6) zu implementieren.
2. Bremssystem (2) nach Aspekt 1,
   wobei die erste Druckversorgungseinheit (6) im ersten Fehlerfall derart gesteuert wird, dass sie bei einem Druckabbau zur Bereitstellung des ABS-Bremsbetriebs eine Drucksenke mit einem niedrigeren Druck als die Drücke in den Radbremsen (RB1, RB2, RB3, RB4) generiert.
3. Bremssystem (2) nach Aspekt 1 oder 2,
   wobei zumindest einige der Trennventile (USV1, USV2, HSV1, HSV2) des ersten Moduls zur Herstellung einer hydraulischen Verbindung zwischen den Bremsdruckeinstellventilen (AV1-AV4, EV1-EV4), insbesondere den Auslassventilen (AV1, AV2, AV3, AV4), und den Anschlusspunkten (A1, A2) angeordnet und ausgebildet sind, wobei das Bremssystem (2) vorzugsweise dazu konfiguriert ist, im ersten Fehlerfall für einen Druckabbau in einer der Radbremsen das zugeordnete Auslassventil (AV1, AV2, AV3, AV4) zu öffnen.
4. Bremssystem (2) nach einem der vorhergehenden Aspekte,
   wobei eine kommunikative Verbindung (100), insbesondere eine Busverbindung, zwischen dem ersten Steuergerät (9) und dem zweiten Steuergerät (95) ausgebildet ist, wobei das erste Steuergerät (9) vorzugsweise dazu ausgebildet ist, Druckmesswerte der dritten Druckversorgungseinheit (90) und/oder Raddrehzahlsignale über die kommunikative Verbindung (100) zu empfangen.
5. Bremssystem (2) nach einem der Aspekte 1 bis 3,
   wobei eine kommunikative Verbindung (100), insbesondere eine Busverbindung, zwischen dem ersten Steuergerät (9) und dem zweiten Steuergerät (95) ausgebildet ist, wobei das erste Steuergerät (9) und das zweite Steuergerät (95) vorzugsweise dazu ausgebildet ist, Druckmesswerte der dritten Druckversorgungseinheit (90) und/oder Raddrehzahlsignale über die kommunikative Verbindung (100) zu empfangen.
6. Bremssystem (2) nach einem der vorhergehenden Aspekte,
   wobei das erste Steuergerät (9) oder das zweite Steuergerät (95) oder ein drittes Steuergerät dazu ausgebildet sind, im ersten Fehlerfall, die erste Druckversorgungseinheit (6) und die Bremsdruckeinstellventile (AV1-AV4, EV1-EV4) zu steuern, um eine radindividuelle und/oder bremskreisindividuelle Druckregelung in den Radbremsen (RB1, RB2, RB3, RB4) oder den Bremskreisen (BK1, BK2) zu implementieren.
7. Bremssystem (2) nach einem der vorhergehenden Aspekte,
   wobei
   - ein erstes Trennventil (BP1) des ersten Moduls in einer ersten Hydraulikleitung (HL1) zwischen der ersten Druckversorgungseinheit (6) und dem ersten Anschlusspunkt (A1) angeordnet ist und ein zweites Trennventil (TV_{BK2}) in einer zweiten Hydraulikleitung (HL2) zwischen der ersten Druckversorgungseinheit (6) und dem zweiten Anschlusspunkt (A2) angeordnet ist,
      wobei das Bremssystem (2) dazu ausgebildet ist,
   - einen zweiten Fehlerfall, insbesondere einen Totalausfall des zweiten Moduls, zu detektieren,
   - im zweiten Fehlerfall, die erste Druckversorgungseinheit (6) und das erste und zweite Trennventil (BP1, TV_{BK2}) zu steuern, um zumindest eine bremskreisindividuelle Druckregelung in den zumindest zwei Bremskreisen (BK1, BK2) zu implementieren.
8. Bremssystem (2) nach einem der vorhergehenden Aspekte, insbesondere nach Aspekt 7,
   wobei das Bremssystem, insbesondere das erste Steuergerät (9) dazu eingerichtet ist,
   - eine inhomogene Straßenbedingung, insbesondere eine µ-Split-Situation, zu detektieren und
   - im zweiten Fehlerfall und bei der inhomogenen Straßenbedingung, die erste Druckversorgungseinheit (6) zu steuern, um in mindestens einem ausgewählten Bremskreis der Bremskreise (BK1, BK2) einen Soll-Bremsdruck einzustellen, der in Abhängigkeit von einem Radblockierdruck der Radbremse (RB1, RB2, RB3, RB4) des ausgewählten Bremskreises (BK1, BK2) mit dem im Vergleich zu der anderen Radbremse (RB1, RB2, RB3, RB4) des ausgewählten Bremskreises (BK1, BK2) höheren Reibwert bestimmt wird.
9. Bremssystem (2) nach einem der vorhergehenden Aspekte,
   wobei zumindest das zweite Modul Radsensoren zum Erfassen einer Radgeschwindigkeit aufweist, die dazu eingerichtet sind, über die kommunikative Verbindung (100) aus der erfassten Radgeschwindigkeit generierte Raddrehzahlsignale oder die erfasste Radgeschwindigkeit zum ersten Modul, insbesondere zum ersten Steuergerät (9), zu übermitteln.
10. Bremssystem (2) nach einem der vorhergehenden Aspekte,
   wobei das Bremssystem, insbesondere das erste Steuergerät (9) dazu eingerichtet ist, in einem dritten Fehlerfall mittels der ersten Druckversorgungseinheit (6) den Druckaufbau und den Druckabbau zu steuern, um ein 1-Kanal-ABS unter Verwendung von Raddrehzahlsensoren und/oder in einem vierten Fehlerfall eine Stotterbremse durch Druckmodulation zwischen zwei fest eingestellten Druckniveaus in beiden Bremskreisen (BK1, BK2) zu implementieren.
11. Bremssystem (2) nach einem der vorhergehenden Aspekte,
   wobei mindestens ein Drucksensor zum Erfassen eines Bremsdruckes innerhalb des zumindest einen Bremskreises (BK1, BK2) vorgesehen ist.
12. Bremssystem (2) nach einem der vorhergehenden Aspekte,
   wobei das erste Modul umfasst:
   - eine Rotationspumpe, insbesondere eine 1-Kolbenpumpe oder 3-Kolbenpumpe, zum Druckaufbau und Druckabbau;
   - ein mit einem Vorratsbehälter (40) hydraulisch verbundenes Magnetventil (PD2)
   - optional zumindest einen Druckgeber, der vorzugsweise kommunikativ mit dem ersten Steuergerät (9) zur Regelung des Druckaufbaus und des Druckabbaus verbunden ist.
13. Bremssystem (2) nach einem der Aspekte 1 bis 11,
   wobei die erste Druckversorgungseinheit (6) als Zahnradpumpe zum Druckaufbau und Druckabbau ausgebildet ist.
14. Bremssystem (2) nach Aspekt 13,
   wobei die Zahnradpumpe unter Verwendung eines Druckgebers oder in Abhängigkeit von einer Messung eines Stroms, insbesondere eines Phasenstroms i des elektromotorischen Antriebes der Zahnradpumpe, und eines Winkels α eines Rotors des elektromotorischen Antriebes gesteuert wird.
15. Bremssystem (2) nach einem der vorhergehenden Aspekte,
   wobei mindestens ein drittes Trennventil (BP2) vorgesehen ist, das derart angeordnet und ausgebildet ist, dass in einem geschlossenen Zustand des dritten Trennventils (BP2) der erste Bremskreis (BK1) hydraulisch von der ersten und zweiten Druckversorgungseinheit (6, 14) entkoppelt ist.
16. Bremssystem (2) nach einem der vorhergehenden Aspekte,
   wobei die erste Hydraulikleitung (HL1) und/oder die zweite Hydraulikleitung (HL2) über (jeweils) ein Saugventil (70b, 70c) mit einem Vorratsbehälter (40) verbunden sind.
17. Bremssystem (2) nach einem der vorhergehenden Aspekte,
   wobei an der zweiten Druckversorgungseinheit (14) ein Betätigungselement (26), insbesondere ein Bremspedal, angeordnet ist, wobei die zweite Druckversorgungseinheit (14) einen Hauptbremszylinder (22) mit einem einzigen mittels des Bestätigungselements (26) betätigbaren Kolben (24) umfasst.
18. Verfahren zum Steuern eines Bremssystems (2), insbesondere eines Bremssystems (2) nach einem der vorhergehenden Aspekte, umfassend die Schritte:
   - Steuern einer ersten Druckversorgungseinheit (6) eines ersten Moduls mittels eines ersten Steuergeräts (9) in einem Normalbetrieb,
   - Steuern einer Vielzahl von Bremsdruckeinstellventilen (AV1-AV4, EV1-EV4) in einem zweiten Modul in einem Normalbetrieb,
   - Detektieren eines ersten Fehlerfalls, insbesondere eines Teilausfalls des zweiten Moduls,
   - Steuerung des Bremssystems (2) im ersten Fehlerfall derart, dass zur Bereitstellung eines ABS-Bremsbetriebs und/oder eines Giermomenteingriffs eine (radindividuelle und/oder selektive) Einstellung der Drücke in den Radbremsen unter Ansteuerung mindestens eines der Bremsdruckeinstellventile (AV1-AV4, EV1-EV4) des zweiten Moduls und/oder der insbesondere bidirektionalen Trennventile (USV1, USV2, HSV1, HSV2) des zweiten Moduls und der ersten Druckversorgungseinheit (6) erfolgt.
19. Verfahren nach Aspekt 18,
   umfassend:
   - ein Detektieren eines zweiten Fehlerfalls, insbesondere eines Totalausfalls der dritten Druckversorgungseinheit (90),
   - ein Steuern der ersten Druckversorgungseinheit (6) und mindestens zweier Trennventile (BP1, TVBK2) des ersten Moduls derart, dass im zweiten Fehlerfall eine bremskreisindividuelle Druckregelung in den zumindest zwei Bremskreisen (BK1, BK2) implementiert wird.
20. Verfahren nach Aspekt 19,
   umfassend:
   - ein Detektieren einer inhomogenen Straßenbedingung, insbesondere eine µ-Split-Situation,
   - ein Steuern der ersten Druckversorgungseinheit (6) im zweiten Fehlerfall derart, dass bei inhomogenen Straßenbedingungen die Radbremse (RB1, RB2, RB3, RB4) eines ausgewählten Bremskreises (BK1, BK2) mit dem im Vergleich zu der anderen Radbremse (RB1, RB2, RB3, RB4) höheren Reibwert zur Bestimmung eines Soll-Bremsdrucks herangezogen wird.
21. Verfahren nach einem der Aspekte 18 bis 20, insbesondere nach Aspekt 19 oder 20,
   umfassend:
   - ein Detektieren eines dritten Fehlerfalls, insbesondere eines Totalausfalls der dritten Druckversorgungseinheit (90) und/oder eines Ausfalls von Radsensoren,
   - ein Steuern der ersten Druckversorgungseinheit (6) im dritten Fehlerfall derart, dass ein 1-Kanal-ABS oder in einem vierten Fehlerfall eine Stotterbremse durch Druckmodulation zwischen zwei vorgegebenen Druckniveaus in zumindest einem der Bremskreise (BK1, BK2) implementiert wird.
22. Verfahren nach einem der Aspekte 18 bis 21, insbesondere nach Aspekt 18 umfassend:
   - Bestimmen eines ersten Radblockierdrucks an einer ersten Radbremse (RB1, RB2, RB3, RB4), die einem der beiden Bremskreise (BK1, BK2) zugeordnet ist;
   - Bestimmen eines zweiten Radblockierdrucks an einer Radbremse (RB1, RB2, RB3, RB4), die demselben Bremskreis (BK1, BK2) zugeordnet ist, wobei eine inhomogene Straßenbedingung dann detektiert wird, wenn der erste und der zweite Radblockierdruck eine Differenz von mehr als 30 Prozent aufweisen.

An dieser Stelle sei darauf hingewiesen, dass alle oben beschriebenen Teile jeweils für sich - auch ohne im jeweiligen Zusammenhang zusätzlich beschriebene Merkmale, selbst wenn diese nicht explizit als optionale Merkmale im jeweiligen Zusammenhang individuell kenntlich gemacht worden sind, z. B. durch Verwendung von: insbesondere, vorzugsweise, beispielsweise, z. B., ggf., runden Klammern, etc. - und in Kombination oder jeglicher Unterkombination als eigenständige Ausgestaltungen bzw. Weiterbildungen der Erfindung, wie sie insbesondere in der Beschreibungseinleitung sowie den Ansprüchen definiert ist, anzusehen sind. Abweichungen hiervon sind möglich. Konkret sei darauf hingewiesen, dass das Wort "insbesondere" oder runde Klammern keine im jeweiligen Kontext zwingende Merkmale kennzeichnen.

### Bezugszeichenliste

- 2: Bremssystem
- 6: erste Druckversorgungseinheit
- 8: elektromotorischer Antrieb
- 9: Steuergerät (ECU-DV)
- 14: zweite Druckversorgungseinheit
- 22: Hauptbremszylinder
- 24: Kolben
- 26: Betätigungselement
- 28, WS: Wegsimulator
- 28a, 28b: Dichtelement des Wegsimulators
- 29: Wegsimulator-Ventil
- 30a, 30b: Pedalwegsensor
- 38: Schnüffelbohrung der zweiten Druckversorgungseinheit
- 40: Vorratsbehälter
- 42a, 42b: Dichtelement des Hilfskolbens
- 69: Einspeiseventil
- 70b, 70c, 80d,: Saugventil (Rückschlagventil)
- RV1, RV2, NV: Saugventil (Rückschlagventil)
- RVHZ: Rückschlagventil (Hauptzylinder)
- 74, PD1, PD2: Trennventil
- 80, ÜV: Druckbegrenzungsventil
- 90: dritte Druckversorgungseinheit
- 91: Motor-Pumpen-Einheit
- 95: Steuergerät der ESP-Einheit
- 100: kommunikative Verbindung (CAN-Bus)
- A1, A2: Anschlusspunkt
- B1, B2: Elektrische Anschlüsse (dreiphasig)
- P: Pumpe
- M: Motor
- BP1, TV1: erstes Trennventil
- TVBK2, TV2: zweites Trennventil
- BP2: drittes Trennventil
- RB1, RB2, RB3, RB4: Radbremse
- DR: Drossel
- BK1: erster Bremskreis
- BK2: zweiter Bremskreis
- HL1: erste Hydraulikleitung
- HL2: zweite Hydraulikleitung
- HL3: dritte Hydraulikleitung
- HL4: vierte Hydraulikleitung
- VA: Vorderachse
- HA: Hinterachse
- NS: Schwimmer
- NST: Niveausensor
- HSV1, HSV2,: Trennventile der ESP-Einheit
- USV1, USV2: Trennventile der ESP-Einheit
- AV1, AV2, AV3, AV4: Auslassventil der ESP-Einheit
- EV1, EV2, EV3, EV4: Einlassventil der ESP-Einheit

## Patentansprüche

1. Bremssystem (2) mit
einem ersten Modul, umfassend einer ersten Druckversorgungseinheit (6) mit einem elektromotorischen Antrieb (8), eine zweite Druckversorgungseinheit (14) mit Betätigungselement, insbesondere Bremspedal, und ein erstes Steuergerät (9) zur Steuerung der ersten Druckversorgungseinheit (6), wobei das erste Modul dazu eingerichtet ist, zumindest einen ersten Bremskreis (BK1) über einen ersten Anschlusspunkt (A1) und zumindest einen zweiten Bremskreis (BK2) über einen zweiten Anschlusspunkt (A2) mit einem Druckmittel zu beaufschlagen, wobei den Bremskreisen (BK1, BK2) Radbremsen (RB1, RB2, RB3, RB4) zugeordnet sind,
wobei das Bremssystem dazu ausgebildet ist, ein aktives Rückziehen mindestens eines Bremsbelages der Radbremsen (RB1, RB2, RB3, RB4) durch Unterdruckerzeugung mittels der ersten Druckversorgungseinheit (6) zu implementieren.

2. Bremssystem (2) nach Anspruch 1, umfassend:
eine Detektionseinheit zur Detektion eines ersten Fehlerfalls, insbesondere eines zu mindestens teilweisen Ausfalls der dritten Druckversorgungseinheit (90), wobei das Bremssystem (2) dazu eingerichtet ist, im ersten Fehlerfall zur Bereitstellung einer ABS-Funktion und/oder eines Giermomenteingriffs eine (radindividuelle und/oder selektive) Einstellung der Drücke in den Radbremsen unter Ansteuerung mindestens eines der Bremsdruckeinstellventile (AV1-AV4, EV1-EV4) des zweiten Moduls und/oder der Trennventile (USV1, USV2, HSV1, HSV2) des zweiten Moduls und der ersten Druckversorgungseinheit (6) zu implementieren.

3. Bremssystem (2) nach einem der vorhergehenden Ansprüche,
das dazu ausgebildet ist, insbesondere im Service und/oder während des Betriebs, ein Lüftspiel in der Radbremse RB1, RB2, RB3, RB4 radindividuell oder bremskreisindividuell durch Auswertung des Druckverlaufes zu messen.

4. Bremssystem (2) nach einem der vorhergehenden Ansprüche, insbesondere nach Anspruch 3,
wobei das Bremssystem dazu ausgebildet ist,
bei Aktivierung der Radbremse (RB1, RB2, RB3, RB4), beispielsweise mittels eines Bremspedals, ein radindividuelles oder bremskreisindividuelles Lüftspiel mittels einer Kolbenwegsteuerung der ersten Druckversorgungseinheit (6) zu überwinden.

5. Bremssystem (2) nach einem der vorhergehenden Ansprüche, wobei der elektromotorische Antrieb (8) einen bürstenlosen Motor, vorzugsweise mit kleiner Zeitkonstante, umfasst,
wobei das Bremssystem dazu ausgebildet ist, bei Aktivierung der Radbremse (RB1, RB2, RB3, RB4), beispielsweise mittels eines/des Bremspedals, ein (bekanntes) Lüftspiel bzw. das (bekannte) Lüftspiel mittels einer Kolbenwegsteuerung der ersten Druckversorgungseinheit (6) derart schnell zu überwinden, dass der Fahrer die Verzögerung beim Betätigen des Bremspedals nicht wahrnimmt.

6. Bremssystem (2) mit
• Radbremsen (RB1, RB2, RB3, RB4);
• einem ersten Modul, umfassend eine erste Druckversorgungseinheit (6) mit einem elektromotorischen Antrieb (8) und ein erstes Steuergerät (9) zur Steuerung der ersten Druckversorgungseinheit (6), wobei das erste Modul dazu eingerichtet ist, zumindest einen ersten Bremskreis (BK1) über einen ersten Anschlusspunkt (A1) und zumindest einen zweiten Bremskreis (BK2) über einen zweiten Anschlusspunkt (A2) mit einem Druckmittel zu beaufschlagen, wobei den Bremskreisen (BK1, BK2) Radbremsen (RB1, RB2, RB3, RB4) zugeordnet sind,
wobei die Radbremsen (RB1, RB2, RB3, RB4) Rollbackdichtungen und/oder Rückstellfedern zur Herstellung eines Lüftspiels umfassen,
wobei das Bremssystem dazu ausgebildet ist,
a) mindestens ein radindividuelles oder bremskreisindividuelles Lüftspiel zu bestimmen; und
b) bei Aktivierung der Radbremse (RB1, RB2, RB3, RB4), beispielsweise mittels eines Bremspedals, das mindestens eine radindividuelle bzw. bremskreisindividuelle Lüftspiel mittels einer Kolbenwegsteuerung der ersten Druckversorgungseinheit (6) zu überwinden.

7. Bremssystem (2) nach einem der vorhergehenden Ansprüche mit:
einem zweiten Modul, umfassend eine dritte Druckversorgungseinheit (90), insbesondere eine Motor-Pumpen-Einheit (91), Trennventile (USV1, USV2, HSV1, HSV2) sowie Bremsdruckeinstellventile, insbesondere Auslass- (AV1, AV2, AV3, AV4) und Einlassventile (EV1, EV2, EV3, EV4), zur Einstellung eines Drucks in den Radbremsen (RB1, RB2, RB3, RB4) und ein zweites Steuergerät (95) zur Steuerung der Bremsdruckeinstellventile (AV1-AV4, EV1-EV4).

8. Bremssystem (2) nach einem der vorhergehenden Ansprüche, insbesondere nach Anspruch 6 oder 7,
wobei das Bremssystem dazu ausgebildet ist, Unterschiede in den Lüftspielen der Radbremsen (RB1, RB2, RB3, RB4) auszugleichen, indem (die) Einlassventile (EV1 bis EV4) des zweiten Moduls angesteuert werden.

9. Bremssystem (2) nach einem der vorhergehenden Ansprüche,
wobei das Bremssystem (2) dazu ausgebildet ist, einen Fahrzeugelektromotor in einer Phase des Überwindens des Lüftspiels so zu steuern, dass der Fahrzeugelektromotor eine Bremswirkung erzeugt.

10. Bremssystem (2) nach einem der vorhergehenden Ansprüche,
wobei zumindest einige der Trennventile (USV1, USV2, HSV1, HSV2) des ersten Moduls zur Herstellung einer hydraulischen Verbindung zwischen den Bremsdruckeinstellventilen (AV1-AV4, EV1-EV4), insbesondere den Auslassventilen (AV1, AV2, AV3, AV4), und den Anschlusspunkten (A1, A2) angeordnet und ausgebildet sind, wobei das Bremssystem (2) vorzugsweise dazu konfiguriert ist, im ersten Fehlerfall für einen Druckabbau in einer der Radbremsen das zugeordnete Auslassventil (AV1, AV2, AV3, AV4) zu öffnen.

11. Bremssystem (2) nach einem der vorhergehenden Ansprüche,
wobei eine kommunikative Verbindung (100), insbesondere eine Busverbindung, zwischen dem ersten Steuergerät (9) und dem zweiten Steuergerät (95) ausgebildet ist, wobei das erste Steuergerät (9) vorzugsweise dazu ausgebildet ist, Druckmesswerte der dritten Druckversorgungseinheit (90) und/oder Raddrehzahlsignale über die kommunikative Verbindung (100) zu empfangen.

12. Bremssystem (2) nach einem der vorhergehenden Ansprüche,
wobei die zweite Druckversorgungseinheit (14) einen Hauptbremszylinder (22) mit einem einzigen mittels des Bestätigungselements (26) betätigbaren Kolben (24) umfasst.

13. Verfahren zum Steuern eines Bremssystems (2), insbesondere eines Bremssystems (2) nach einem der vorhergehenden Ansprüche, mit Radbremse (RB1, RB2, RB3, RB4), umfassend die Schritte:
- Bestimmen von radindividuellen oder bremskreisindividuellen Lüftspielen; und
- bei Aktivierung der Radbremse (RB1, RB2, RB3, RB4), beispielsweise mittels eines Bremspedals, Steuern, insbesondere Kolbenwegsteuern, einer ersten Druckversorgungseinheit (6) zur Überwindung der radindividuellen bzw. bremskreisindividuellen Lüftspiele.

14. Verfahren nach Anspruch 13,
wobei Unterschiede in den Lüftspielen ausgeglichen werden, indem Einlassventile (EV1 bis EV4) einer ESP-Einheit angesteuert werden.

15. Verfahren zum Steuern eines Bremssystems (2), insbesondere eines Bremssystems (2) nach einem der vorhergehenden Ansprüche, mit
- Radbremsen (RB1, RB2, RB3, RB4);
- einem ersten Modul mit einer ersten Druckversorgungseinheit (6) umfassend einen elektromotorischen Antrieb (8); und
- einem zweiten Modul, umfassend eine dritte Druckversorgungseinheit (90), nämlich eine Motor-Pumpen-Einheit (91), sowie Bremsdruckeinstellventile, nämlich Auslass- (AV1, AV2, AV3, AV4) und Einlassventile (EV1, EV2, EV3, EV4), zur Einstellung eines Drucks in den Radbremsen (RB1, RB2, RB3, RB4) und ein zweites Steuergerät (95) zur Steuerung der Bremsdruckeinstellventile (AV1-AV4, EV1-EV4),
wobei das Verfahren den Schritt des aktiven Rückziehens mindestens eines Bremsbelages der Radbremsen (RB1, RB2, RB3, RB4) durch Unterdruckerzeugung mittels der ersten Druckversorgungseinheit (6) umfasst.

16. Verfahren nach Anspruch 15,
wobei Unterschiede in den Lüftspielen ausgeglichen werden, indem Einlassventile (EV1 bis EV4) des zweiten Moduls angesteuert werden.
